# EUROPEAN PATENT APPLICATION

(11) **EP 4 564 825 A1**
(43) Date of publication of application: **04.06.2025**
(21) Application number: 23859106.9
(22) Date of filing: 09.08.2023
(51) Int. Cl.: H04N 21/43

(54) **DATA TRANSMISSION METHOD AND APPARATUS**

(30) Priority: 29.08.2022 CN 202211043681
(71) Applicant: Huawei Technologies Co., Ltd., Shenzhen, Guangdong 518129 (CN)
(72) Inventor: WANG, Yali, Shenzhen, Guangdong 518129 (CN); WANG, Jian, Shenzhen, Guangdong 518129 (CN); SHI, Juncai, Shenzhen, Guangdong 518129 (CN)
(74) Representative: Körber, Martin Hans
(86) International application number: PCT/CN2023/111988
(87) International publication number: WO 2024/046071

(57) **Abstract**

This application provides a data transmission method and apparatus, to implement inter-stream synchronization between different data streams received by different sink end devices. The method includes: A first device sends a first packet to a second device, and sends a second packet to a third device, where the first packet includes a first data stream and a sampling time sequence of the first data stream, the second packet includes a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device; and the first device sends third packets to the second device and the third device, where the third packet includes a first time stamp and a second time stamp, the first time stamp indicates device time information of the first device, the second time stamp indicates a time sequence value corresponding to the system clock of the codec, and the third packet corresponds to a second communication protocol.

## Description

### CROSS-REFERENCE TO RELATED APPLICATIONS

This application claims priority to Chinese Patent Application No. 202211043681.0, filed with the China National Intellectual Property Administration on August 29, 2022 and entitled "DATA TRANSMISSION METHOD AND APPARATUS", which is incorporated herein by reference in its entirety.

### TECHNICAL FIELD

This application relates to the field of short-range communication technologies, and in particular, to a data transmission method and apparatus.

### BACKGROUND

Currently, short-distance wireless communication technologies are widely applied to fields such as smart vehicles, smart transportation, smart terminals, smart homes, and smart manufacturing. In streaming media application scenarios such as vehicle-mounted panoramic surround view and wireless projection (for example, vehicle-mounted projection and home theater projection), inter-stream synchronization (namely, play time synchronization between different data streams) between different data streams (for example, audio data streams and/or video data streams) needs to be implemented. For example, in a vehicle-mounted projection scenario, a mobile phone generates an audio data stream and a video data stream. The mobile phone sends the audio data stream to a vehicle-mounted speaker, and sends the video data stream to a vehicle-mounted central display screen. Time at which the vehicle-mounted speaker plays the audio data stream needs to be synchronized with time at which the vehicle-mounted central display screen plays the video data stream, to meet a requirement of audio-to-image synchronization in the vehicle-mounted projection scenario.

Therefore, how to implement inter-stream synchronization between different data streams in the streaming media application scenario is an urgent technical problem that needs to be resolved in this field.

### SUMMARY

This application provides a data transmission method and apparatus, to implement inter-stream synchronization between different data streams.

According to a first aspect, a data transmission method is provided. The method is applicable to a scenario of inter-stream synchronization between different data streams between a plurality of source end devices and one sink end device. An example in which the source end device is a first device is used, and the sink end device is a second device and a third device is used. The method includes: A first device sends a first packet to a second device, where the first packet includes a first data stream and a sampling time sequence of the first data stream; the first device sends a second packet to a third device, where the second packet includes a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device; and the first device sends third packets to the second device and the third device, where the third packet includes a first time stamp and a second time stamp, the first time stamp indicates device time information of the first device, the second time stamp indicates a time sequence value corresponding to the system clock of the codec, and the third packet corresponds to a second communication protocol.

It may be understood that the first device may periodically send the first packet to the second device, and the first device may periodically send the second packet to the third device. It can be learned from the foregoing that the first packet represents a plurality of packets or a series of packets that meet a same attribute, and the same attribute of any one of the plurality of packets or the series of packets is as follows: The packet is sent by the first device to the second device, includes the first data stream and the sampling time sequence of the first data stream, and corresponds to the first communication protocol. The second packet represents a plurality of packets or a series of packets that meet a same attribute, and the same attribute of any one of the plurality of packets or the series of packets is as follows: The packet is sent by the first device to the third device, includes the second data stream and the sampling time sequence of the second data stream, and corresponds to the first communication protocol. The first data stream and the second data stream may be audio streams or video streams. For example, the first data stream and the second data stream are audio streams of different sound channels. For another example, the first data stream is a video stream, and the second data stream is an audio stream.

In the foregoing solution, the first device sends the first packet to the second device, sends the second packet to the third device, and sends the third packets to the second device and the third device, where the third packet includes the first time stamp and the second time stamp, the first time stamp indicates the device time information of the first device, and the second time stamp indicates the time sequence value corresponding to the system clock of the codec of the first device. The device time information of the first device and the time sequence value that corresponds to the system clock of the codec of the first device meet a first mapping relationship. Therefore, when receiving the third packet, the second device may map, based on the device time information of the first device and the time sequence value that corresponds to the system clock of the codec of the first device, the sampling time sequence of the first data stream to a first moment on a time axis on which the device time information is located. Similarly, after receiving the third packet, the third device may map, based on the device time information of the first device and the time sequence value that corresponds to the system clock of the codec of the first device, the sampling time sequence of the second data stream to a third moment on the time axis on which the device time information of the first device is located. In this way, the sampling time sequence of the first data stream and the sampling time sequence of the second data stream are mapped to a same time axis, so that actual sending moments and/or processing moments of the first packet and the second packet are correspondingly adjusted, to implement inter-stream synchronization between the first data stream in the first packet and the second data stream in the second packet.

In a possible implementation, the device time information of the first device represents air interface time of the first device. In this way, a reference time axis of the first packet and the second packet is a time axis of the air interface time of the first device.

In a possible implementation, the method further includes: The first device sends a system message, where the system message includes a hyper frame number and clock information that corresponds to a moment at which a start point of a cyclic prefix of a first orthogonal frequency division multiplexing (Orthogonal Frequency Division Multiplexing, OFDM) symbol in a hyper frame corresponding to the hyper frame number passes through an antenna connector; or the first device sends data link layer control plane data to the second device and the third device, where the data link layer control plane data includes clock information, where the clock information is associated with the device time information, and the clock information is used by the second device and the third device to perform clock synchronization with the first device. The antenna connector is a connection unit that is in the first device and that connects a radio frequency analog circuit of a transceiver and an antenna.

Optionally, when the first device, the second device, and the third device belong to a SparkLink Basic (SparkLink Basic, SLB) system, the first device sends the system message.

Optionally, when the first device, the second device, and the third device belong to a SparkLink Low Energy (SparkLink Basic, SLE) system, the first device sends the data link layer control plane data to the second device and the third device.

In this implementation, the second device and the third device perform clock synchronization with the first device by using the clock information carried in the system message, or the second device and the third device perform clock synchronization with the first device by using the clock information carried in the data link layer control plane data.

In a possible implementation, the method further includes: The first device obtains the device time information of the first device before sending the third packets to the second device and the third device.

In a possible implementation, that the first device obtains the device time information of the first device includes: The first device obtains the device time information of the first device by using an inter-layer primitive of a protocol stack. In this implementation, the first device obtains the device time information of the first device by using the inter-layer primitive of the protocol stack, so that it is easy to obtain the device time information of the first device, thereby improving efficiency of subsequent inter-stream synchronization between different data streams. In addition, this manner does not depend on a specific protocol. This effectively reduces complexity and costs of the solution.

In a possible implementation, the protocol stack includes a first protocol layer, a second protocol layer, and a third protocol layer; and correspondingly, that the first device obtains the device time information by using an inter-layer primitive of a protocol stack includes: The first protocol layer sends a first inter-layer primitive to the second protocol layer, where the first inter-layer primitive is used by the first protocol layer to request the second protocol layer to query the device time information; the second protocol layer sends a second inter-layer primitive to the third protocol layer, where the second inter-layer primitive is used by the second protocol layer to request the third protocol layer to query the device time information; the second protocol layer receives a third inter-layer primitive from the third protocol layer, where the third inter-layer primitive is used by the third protocol layer to indicate the device time information to the second protocol layer; and the first protocol layer receives a fourth inter-layer primitive from the second protocol layer, where the fourth inter-layer primitive is used by the second protocol layer to indicate the device time information to the first protocol layer.

In a possible implementation, the method further includes: The first device receives first information from the second device, and receives second information from the third device, where the first information indicates a transmission delay of the first packet, and the second information indicates a transmission delay of the second packet; the first device determines a first delay difference between the transmission delay of the first packet and the transmission delay of the second packet based on the transmission delay of the first packet and the transmission delay of the second packet; and the first device adjusts an actual sending moment of the first packet or an actual sending moment of the second packet based on the first delay difference; or the first device sends third information to the second device or the third device, where the third information indicates the first delay difference.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the second device receives the any packet, and the sending time of the first packet is time at which the first device sends the any packet to the second device. Correspondingly, the actual sending moment of the first packet is sending time of one or more packets that are in the first packet and that are sent after the any packet. Therefore, "the first device adjusts the actual sending moment of the first packet based on the first delay difference" may be understood as that the first device adjusts, based on the first delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the third device receives the any packet, and the sending time of the any packet is time at which the first device sends the any packet to the third device. Correspondingly, the actual sending moment of the second packet is sending time of one or more packets that are in the second packet and that are sent after the any packet. Therefore, "the first device adjusts the actual sending moment of the second packet based on the first delay difference" may be understood as that the first device adjusts, based on the first delay difference, the sending time of the one or more packets that are in the second packet and that are sent after the any packet.

In this implementation, the first device (the source end device) may calculate a relative transmission delay difference (namely, the first delay difference) between the first packet and the second packet based on the transmission delay of the first packet and the transmission delay of the second packet, and the first device adjusts the actual sending moment of the first packet or the actual sending moment of the second packet based on the first delay difference; or the first device sends the third information to the second device, where the third information indicates the first delay difference, so that the second device adjusts a processing moment of the first packet; or the first device sends the third information to the third device, where the third information indicates the first delay difference, so that the third device adjusts a processing moment of the second packet. In this way, after the first packet and the second packet each are processed by a corresponding sink end device, play time of the first data stream in the first packet is synchronized with play time of the second data stream in the second packet.

It may be understood that the processing moment of the first packet is a start moment at which the second device processes the first packet. The processing moment of the second packet is a start moment at which the third device processes the second packet.

In a possible implementation, the method further includes: The first device obtains a processing delay of the first packet and a processing delay of the second packet; the first device determines a second delay difference based on the processing delay of the first packet and the processing delay of the second packet; and the first device adjusts the actual sending moment of the first packet or the actual sending moment of the second packet based on the second delay difference; or the first device sends fourth information to the second device or the third device, where the fourth information indicates the second delay difference.

It may be understood that the processing delay of the first packet is time required for the second device to perform one or more processes such as decapsulating the first packet, decoding or rendering the first data stream in the first packet, or the like. The processing delay of the second packet is time required for the third device to perform one or more processes such as decapsulating the second packet, decoding or rendering the second data stream in the second packet, or the like.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the second device receives the any packet, and the sending time of the first packet is time at which the first device sends the any packet to the second device. Correspondingly, the actual sending moment of the first packet is sending time of one or more packets that are in the first packet and that are sent after the any packet. Therefore, "the first device adjusts the actual sending moment of the first packet based on the second delay difference" may be understood as that the first device adjusts, based on the second delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the third device receives the any packet, and the sending time of the any packet is time at which the first device sends the any packet to the third device. Correspondingly, the actual sending moment of the second packet is sending time of one or more packets that are in the second packet and that are sent after the any packet. Therefore, "the first device adjusts the actual sending moment of the second packet based on the second delay difference" may be understood as that the first device adjusts, based on the second delay difference, the sending time of the one or more packets that are in the second packet and that are sent after the any packet.

In this implementation, the first device (the source end device) may obtain the processing delay of the first packet and the processing delay of the second packet, and determine the second delay difference based on the processing delay of the first packet and the processing delay of the second packet; and the first device adjusts the actual sending moment of the first packet or the actual sending moment of the second packet based on the second delay difference; or the first device sends the fourth information to the second device, where the fourth information indicates the second delay difference, so that the second device adjusts the processing moment of the first packet; or the first device sends the fourth information to the third device, where the fourth information indicates the second delay difference, so that the third device adjusts a processing moment of the second packet. In this way, after the first packet and the second packet each are processed by a corresponding sink end device, play time of the first data stream in the first packet is synchronized with play time of the second data stream in the second packet.

It may be understood that the foregoing two implementations may be implemented separately or may be implemented in combination.

In a possible implementation, that the first device obtains a processing delay of the first packet and a processing delay of the second packet includes: The first device receives first indication information from the second device, where the first indication information indicates the processing delay of the first packet; and the first device receives second indication information from the third device, where the second indication information indicates the processing delay of the second packet.

In a possible implementation, the first indication information is carried in first signaling, and the second indication information is carried in second signaling. The first signaling and the second signaling may be implemented in a plurality of manners, for example, may be implemented by using any one of a real-time transport control protocol (Real-Time Transport Control Protocol, RTCP), a real-time streaming protocol (Real-Time Streaming Protocol, RTSP), or a source service access protocol (Source Service Access Protocol, SSAP).

In this implementation, the first indication information and the first indication information are carried in the communication signaling, so that the first device can flexibly obtain the processing delay of the first packet and the processing delay of the second packet.

In a possible implementation, the method further includes: The first device sends first acknowledgment information to the second device after receiving the first indication information, where the first acknowledgment information indicates that the first indication information has been successfully received; and the first device sends second acknowledgment information to the third device after receiving the second indication information, where the second acknowledgment information indicates that the second indication information has been successfully received.

In this implementation, the first device may further send the first acknowledgment information to the second device after receiving the first indication information, where the first acknowledgment information indicates that the first indication information has been successfully received; and the first device may further send the second acknowledgment information to the third device after receiving the second indication information, where the second acknowledgment information indicates that the second indication information has been successfully received. In this way, the second device and the third device can learn a receiving status of the related indication information, so that the second device can send the first indication information again when the first indication information is not successfully received, and the third device can send the second indication information again when the second indication information is not successfully received. This effectively improves communication reliability.

According to a second aspect, an embodiment of this application further provides a data transmission method. The method includes: A second device receives a first packet from a first device, where the first packet includes a first data stream and a sampling time sequence of the first data stream, the first packet corresponds to a first communication protocol, and the sampling time sequence of the first data stream is a time sequence whose value is in a unit of a system clock of a codec of the first device; the second device receives a third packet from the first device, where the third packet includes a first time stamp and a second time stamp, the first time stamp indicates device time information of the first device, the second time stamp indicates a time sequence value corresponding to the system clock of the codec of the first device, and the third packet corresponds to a second communication protocol; and the second device maps, based on the device time information and the time sequence value that corresponds to the system clock of the codec, the sampling time sequence of the first data stream to a first moment on a time axis on which the device time information of the first device is located, where the device time information of the first device and the time sequence value that corresponds to the system clock of the codec meet a first mapping relationship.

In a possible implementation, the device time information of the first device represents air interface time of the first device.

In a possible implementation, the method further includes: The second device receives a system message from the first device, where the system message includes a hyper frame number and clock information that corresponds to a moment at which a start point of a cyclic prefix of a first OFDM symbol in a hyper frame corresponding to the hyper frame number passes through an antenna connector; or the second device receives data link layer control plane data from the first device, where the data link layer control plane data includes clock information, and the clock information is associated with device time information; and the second device performs clock synchronization with the first device based on the clock information.

In a possible implementation, the method further includes: The second device determines a transmission delay of the first packet based on the first moment and a second moment; and the second device sends first information to the first device, where the first information indicates the transmission delay of the first packet; and receiving time of the first packet and the second moment meet the first mapping relationship.

In this implementation, the second device determines the transmission delay of the first packet based on the first moment obtained after the sampling time sequence of the first data stream is mapped and the second moment obtained after the receiving time of the first packet is mapped, so that the determined transmission delay of the first packet is more accurate.

In a possible implementation, the method further includes: The second device receives third information from the first device, where the third information indicates a first delay difference, the first delay difference is a difference between the transmission delay of the first packet and a transmission delay of a second packet, and the second packet is sent by the first device to a third device; and the second device adjusts a processing moment of the first packet based on the first delay difference.

In a possible implementation, the method further includes: The second device receives fourth information from the first device, where the fourth information indicates a second delay difference, the second delay difference is a difference between a processing delay of the first packet and a processing delay of the second packet, and the second packet is sent by the first device to the third device; and the second device adjusts the processing moment of the first packet based on the second delay difference.

In a possible implementation, the method further includes: The second device sends first indication information to the first device, where the first indication information indicates the processing delay of the first packet.

In a possible implementation, the first indication information is carried in first signaling.

In a possible implementation, the method further includes: The second device receives first acknowledgment information from the second device after sending the first indication information, where the first acknowledgment information indicates that the first indication information has been successfully received.

According to a third aspect, an embodiment of this application provides a data transmission method. The method is applicable to a scenario of inter-stream synchronization between different data streams between a plurality of source end devices and one sink end device. An example in which the source end devices are a second device and a third device, and the sink end device is a first device is used. The method includes: A first device receives a first packet from a second device, where the first packet includes a first data stream and a sampling time sequence of the first data stream; the first device receives a second packet from a third device, where the second packet includes a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device; the first device receives a third packet from the second device, where the third packet includes a first time stamp and a second time stamp, the first time stamp indicates device time information of the second device, the second time stamp indicates a time sequence value corresponding to the system clock of the codec, the device time information of the second device and the time sequence value that corresponds to the system clock of the codec meet a first mapping relationship, and the third packet corresponds to a second communication protocol; the first device receives a fourth packet from the third device, where the fourth packet includes a third time stamp and a fourth time stamp, the third time stamp indicates device time information of the third device, the fourth time stamp indicates a time sequence value corresponding to the system clock of the codec, the device time information of the third device and the time sequence value that corresponds to the system clock of the codec meet a second mapping relationship, and the fourth packet corresponds to the second communication protocol; and the first device maps, based on device time information of the first device, the device time information of the second device, the device time information of the third device, and the time sequence value corresponding to the system clock of the codec, the sampling time sequence of the first data stream and the sampling time sequence of the second data stream to a time axis on which the device time information of the first device is located, or a time axis on which the device time information of the second device is located, or a time axis on which the device time information of the third device is located.

In this embodiment of this application, the time axis on which the device time information of the first device is located, the time axis on which the device time information of the second device is located, and the time axis on which the device time information of the third device is located are mutually synchronized.

In embodiments of this application, the first device may periodically receive the first packet from the second device, and the first device may periodically receive the second packet from the third device.

It can be learned from the foregoing that the first packet represents a plurality of packets or a series of packets that meet a same attribute, and the same attribute of any one of the plurality of packets or the series of packets is as follows: The packet is sent by the second device to the first device, includes the first data stream and the sampling time sequence of the first data stream, and corresponds to the first communication protocol.

The second packet represents a plurality of packets or a series of packets that meet a same attribute, and the same attribute of any one of the plurality of packets or the series of packets is as follows: The packet is sent by the third device to the first device, includes the second data stream and the sampling time sequence of the second data stream, and corresponds to the first communication protocol. The first data stream and the second data stream may be audio streams or video streams. For example, the first data stream and the second data stream are different video streams. For another example, the first data stream is a video stream, and the second data stream is an audio stream.

In addition, in embodiments of this application, the first device may periodically receive the third packet from the second device, and the first device may periodically receive the fourth packet from the third device.

It can be learned from the foregoing that the third packet represents a plurality of packets or a series of packets that meet a same attribute, and the same attribute of any one of the plurality of packets or the series of packets is as follows: The packet is sent by the second device to the first device, includes a first time stamp and a second time stamp, where the first time stamp indicates the device time information of the second device, and the second time stamp indicates the time sequence value corresponding to the system clock of the codec, and corresponds to the second communication protocol.

The fourth packet represents a plurality of packets or a series of packets that meet a same attribute, and the same attribute of any one of the plurality of packets or the series of packets is as follows: The packet is sent by the third device to the first device, includes a third time stamp and a fourth time stamp, where the third time stamp indicates the device time information of the third device, and the fourth time stamp indicates the time sequence value corresponding to the system clock of the codec, and corresponds to the second communication protocol.

In this solution, the sampling time sequence of the first data stream and the sampling time sequence of the second data stream are converted to a same time axis, so that actual sending moments and/or processing moments of the first packet and the second packet are subsequently correspondingly adjusted, to implement inter-stream synchronization between the first data stream in the first packet and the second data stream in the second packet.

In a possible implementation, the device time information of the second device represents air interface time of the second device, and the device time information of the third device represents air interface time of the third device.

In a possible implementation, the device time information of the first device represents air interface time of the first device.

In a possible implementation, the method further includes: The first device sends a system message, where the system message includes a hyper frame number and clock information that corresponds to a moment at which a start point of a cyclic prefix of a first OFDM symbol in a hyper frame corresponding to the hyper frame number passes through an antenna connector; or the first device sends data link layer control plane data to the second device and the third device, where the data link layer control plane data includes clock information, where the clock information is associated with the device time information of the first device, and the clock information is used by the second device and the third device to perform clock synchronization with the first device.

Optionally, when the first device, the second device, and the third device belong to an SLB system, the first device sends the system message.

Optionally, when the first device, the second device, and the third device belong to an SLE system, the first device sends the data link layer control plane data to the second device and the third device.

In a possible implementation, the method further includes: The first device determines a transmission delay of the first packet based on a first moment and a second moment, where the sampling time sequence of the first data stream and the first moment meet the first mapping relationship, and receiving time of the first packet and the second moment meet the first mapping relationship; the first device determines a transmission delay of the second packet based on a third moment and a fourth moment, where the sampling time sequence of the second data stream and the third moment meet the second mapping relationship, and receiving time of the second packet and the fourth moment meet the second mapping relationship; the first device determines a first delay difference between the transmission delay of the first packet and the transmission delay of the second packet based on the transmission delay of the first packet and the transmission delay of the second packet; and the first device adjusts a processing moment of the first packet or a processing moment of the second packet based on the first delay difference; or the first device sends first information to the second device or the third device, where the first information indicates the first delay difference.

In this implementation, the first device (the sink end device) may determine the transmission delay of the first packet based on the first moment and the second moment, and determine the transmission delay of the second packet based on the third moment and the fourth moment. Further, the first device calculates a relative transmission delay difference (namely, the first delay difference) between the first packet and the second packet based on the transmission delay of the first packet and the transmission delay of the second packet, and the first device adjusts the processing moment of the first packet or the processing moment of the second packet based on the first delay difference. Alternatively, the first device sends third information to the second device, where the third information indicates the first delay difference, so that the second device adjusts the actual sending moment of the first packet based on the first delay difference; or the first device sends third information to the third device, where the third information indicates the first delay difference, so that the third device adjusts the actual sending moment of the second packet based on the first delay difference. In this way, after the first packet and the second packet are processed by the first device (the sink end device), play time of the first data stream in the first packet is synchronized with play time of the second data stream in the second packet.

It may be understood that the processing moment of the first packet is a start moment at which the first device processes the first packet. The processing moment of the second packet is a start moment at which the first device processes the second packet.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the first device receives the any packet, and the sending time of the first packet is time at which the second device sends the any packet to the first device. Correspondingly, the actual sending moment of the first packet is sending time of one or more packets that are in the first packet and that are sent after the any packet. Therefore, "the second device adjusts the actual sending moment of the first packet based on the first delay difference" may be understood as that the second device adjusts, based on the first delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the first device receives the any packet, and the sending time of the any packet is time at which the third device sends the any packet to the first device. Correspondingly, the actual sending moment of the second packet is sending time of one or more packets that are in the second packet and that are sent after the any packet. Therefore, " the third device adjusts the actual sending moment of the first packet based on the first delay difference" may be understood as the third device adjusts, based on the first delay difference, the sending time of the one or more packets that are in the second packet and that are sent after the any packet.

In a possible implementation, the method further includes: The first device determines a second delay difference based on a processing delay of the first packet and a processing delay of the second packet; and the first device adjusts the processing moment of the first packet or the processing moment of the second packet based on the second delay difference; or the first device sends second information to the second device or the third device, where the second information indicates the second delay difference.

It may be understood that the processing delay of the first packet is time required for the first device to perform one or more processes such as decapsulating the first packet, decoding or rendering the first data stream in the first packet, or the like. The processing delay of the second packet is time required for the first device to perform one or more processes such as decapsulating the second packet, decoding or rendering the second data stream in the second packet, or the like.

In this implementation, the first device (the sink end device) may determine the second delay difference based on the processing delay of the first packet and the processing delay of the second packet; and the first device adjusts the processing moment of the first packet or the processing moment of the second packet based on the second delay difference; or the first device sends fourth information to the second device, where the fourth information indicates the second delay difference, so that the second device adjusts the actual sending moment of the first packet; or the first device sends fourth information to the third device, where the fourth information indicates the second delay difference, so that the third device adjusts the actual sending moment of the second packet. In this way, after the first packet and the second packet are processed by the first device (the sink end device), the play time of the first data stream in the first packet is synchronized with the play time of the second data stream in the second packet.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the second device receives the any packet, and the sending time of the first packet is time at which the first device sends the any packet to the second device. Correspondingly, the actual sending moment of the first packet is sending time of one or more packets that are in the first packet and that are sent after the any packet. Therefore, "the second device adjusts the actual sending moment of the first packet based on the second delay difference" may be understood as that the second device adjusts, based on the second delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the third device receives the any packet, and the sending time of the any packet is time at which the first device sends the any packet to the third device. Correspondingly, the actual sending moment of the second packet is sending time of one or more packets that are in the second packet and that are sent after the any packet. Therefore, "the third device adjusts the actual sending moment of the second packet based on the second delay difference" may be understood as that the third device adjusts, based on the second delay difference, the sending time of the one or more packets that are in the second packet and that are sent after the any packet.

According to a fourth aspect, an embodiment of this application provides a data transmission method. The method includes: A second device sends a first packet to a first device, where the first packet includes a first data stream and a sampling time sequence of the first data stream, and the first packet corresponds to a first communication protocol; and the second device sends a third packet to the first device, where the third packet includes device time information of the second device and a time sequence value that corresponds to a system clock of a codec of the first device, and the third packet corresponds to a second communication protocol.

In a possible implementation, the device time information of the second device represents air interface time of the second device.

In a possible implementation, the method further includes: The second device receives a system message from the first device, where the system message includes a hyper frame number and clock information that corresponds to a moment at which a start point of a cyclic prefix of a first OFDM symbol in a hyper frame corresponding to the hyper frame number passes through an antenna connector; or the second device receives data link layer control plane data from the first device, where the data link layer control plane data includes clock information, and the clock information is associated with the device time information of the first device; and the second device performs clock synchronization with the first device based on the clock information, for the device time information of the second device to be consistent with the device time information of the first device.

In a possible implementation, before the second device sends the third packet to the first device, the method further includes: The second device obtains the device time information of the second device.

In a possible implementation, that the second device obtains the device time information of the second device includes: The second device obtains the device time information of the second device by using an inter-layer primitive of a protocol stack.

In a possible implementation, the protocol stack includes a first protocol layer, a second protocol layer, and a third protocol layer; and correspondingly, that the second device obtains the device time information of the second device by using an inter-layer primitive of a protocol stack includes: The first protocol layer sends a first inter-layer primitive to the second protocol layer, where the first inter-layer primitive is used by the first protocol layer to request the second protocol layer to query the device time information of the second device; the second protocol layer sends a second inter-layer primitive to the third protocol layer, where the second inter-layer primitive is used by the second protocol layer to request the third protocol layer to query the device time information of the second device; the second protocol layer receives a third inter-layer primitive from the third protocol layer, where the third inter-layer primitive is used by the third protocol layer to indicate the device time information of the second device to the second protocol layer; and the first protocol layer receives a fourth inter-layer primitive from the second protocol layer, where the fourth inter-layer primitive is used by the second protocol layer to indicate the device time information of the second device to the first protocol layer.

In a possible implementation, the method further includes: The second device receives first information from the first device, where the first information indicates a first delay difference, the first delay difference is a difference between a transmission delay of the first packet and a transmission delay of a second packet, and the second packet is sent by a third device to the first device; and the second device adjusts an actual sending moment of the first packet based on the first delay difference.

In a possible implementation, the method further includes: The second device receives second information from the first device, where the second information indicates a second delay difference, the second delay difference is a difference between a processing delay of the first packet and a processing delay of the second packet, and the second packet is sent by the third device to the first device; and the second device adjusts the actual sending moment of the first packet based on the second delay difference.

According to a fifth aspect, an embodiment of this application further provides a communication apparatus, including a unit configured to implement the method according to any one of the first aspect and the possible implementations of the first aspect, or including a unit configured to implement the method according to any one of the second aspect and the possible implementations of the second aspect, or including a unit configured to implement the method according to any one of the third aspect and the possible implementations of the third aspect, or including a unit configured to implement the method according to any one of the fourth aspect and the possible implementations of the fourth aspect.

According to a sixth aspect, an embodiment of this application further provides a chip system, including at least one processor and an interface circuit. The processor is configured to execute instructions and/or data exchange through the interface circuit, so that the chip system performs the method according to any one of the first aspect and the possible implementations of the first aspect, or performs the method according to any one of the second aspect and the possible implementations of the second aspect, or performs the method according to any one of the third aspect and the possible implementations of the third aspect; or performs the method according to any one of the fourth aspect or the possible implementations of the fourth aspect.

According to a seventh aspect, an embodiment of this application further provides a terminal, including the apparatus according to the fifth aspect or the chip system according to the sixth aspect.

According to an eighth aspect, an embodiment of this application further provides a computer-readable storage medium. The computer-readable storage medium stores instructions. When the instructions are run on a computer, the computer is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect; or perform the method according to any one of the fourth aspect or the possible implementations of the fourth aspect.

According to a ninth aspect, an embodiment of this application further provides a computer-readable storage medium. The computer-readable storage medium stores instructions. When the instructions are run on a computer, the computer is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect; or perform the method according to any one of the fourth aspect or the possible implementations of the fourth aspect.

For effect corresponding to the second aspect, the fourth aspect, and the ninth aspect, refer to related descriptions of the first aspect or the third aspect. Details are not described herein again.

### BRIEF DESCRIPTION OF DRAWINGS

FIG. 1A and FIG. 1B show a correspondence between a degree of audio-to-image asynchronization perceived by a human body and a play delay between an audio and a video;
FIG. 1C is a diagram in which an audio time stamp and a video time stamp are mapped to a same absolute time axis;
FIG. 1D is a diagram of a packet header format of an RTP packet;
FIG. 1E is a diagram of a type of an RTCP packet;
FIG. 2A is a diagram 1 of an architecture of a communication system according to an embodiment of this application;
FIG. 2B is a diagram 1 of a scenario to which an embodiment of this application is applicable;
FIG. 3A is a diagram 2 of an architecture of a communication system according to an embodiment of this application;
FIG. 3B is a diagram 2 of a scenario to which an embodiment of this application is applicable;
FIG. 4 is a schematic flowchart of implementing inter-stream synchronization;
FIG. 5A is a flowchart of a data transmission method according to an embodiment of this application;
FIG. 5B is a diagram of a possible format of a first packet according to an embodiment of this application;
FIG. 5C is a diagram of a possible format of a first packet according to an embodiment of this application;
FIG. 5D is a diagram of a possible format of a third packet according to an embodiment of this application;
FIG. 5E is a diagram of a protocol stack according to an embodiment of this application;
FIG. 5F is a diagram of a first delay difference between a first packet and a second packet according to an embodiment of this application;
FIG. 6A is a schematic flowchart of obtaining a processing delay of a first packet and a processing delay of a second packet by a first device according to an embodiment of this application;
FIG. 6B is a diagram of a format of an RTCP RR packet according to an embodiment of this application;
FIG. 6C is a diagram of a parameter of a processing capability request message in an SSAP PDU according to an embodiment of this application;
FIG. 6D is a diagram of a parameter of a processing capability response message in an SSAP PDU according to an embodiment of this application;
FIG. 6E is a diagram of a parameter of processing capability indication information in an SSAP PDU according to an embodiment of this application;
FIG. 6F is a diagram of a parameter of acknowledgment information in an SSAP PDU according to an embodiment of this application;
FIG. 6G is a diagram of a parameter of a processing capability notification message in an SSAP PDU according to an embodiment of this application;
FIG. 7A is a schematic flowchart of synchronization between a G node and a T node in an SLB system;
FIG. 7B is a schematic flowchart of synchronization between a G node and a T node in an SLE system;
FIG. 8 is a flowchart of another data transmission method according to an embodiment of this application;
FIG. 9 is a diagram of a structure of a data transmission apparatus according to an embodiment of this application; and
FIG. 10 is a diagram of a structure of another data transmission apparatus according to an embodiment of this application.

### DESCRIPTION OF EMBODIMENTS

To make objectives, technical solution, and advantages of embodiments of this application clearer, the following further describes embodiments of this application in detail with reference to accompanying drawings.

The following describes some terms in embodiments of this application, to facilitate understanding of a person skilled in the art.
1. A media stream is also referred to as a data stream in this specification, and the data stream may include an audio stream and/or a video stream.
2. Data stream synchronization includes intra-stream synchronization and inter-stream synchronization.

Intra-stream synchronization means that a receiver does not decode and play a frame of data immediately after receiving the frame of data. Instead, the receiver plays the frame of data when the inter-frame interval arrives. Each frame of data sent from a transmitter has a time stamp, and the time stamp indicates a time point at which the first sampling point of the frame is collected. When encapsulating the frame of data into a data packet, the transmitter writes the time stamp into a packet header of the data packet. Therefore, the receiver may determine a time interval between two adjacent frames based on a difference between time stamps of two adjacent frames, and after receiving a frame of data, the receiver calculates play time of the current frame based on play time of the previous frame and the time interval. The receiving end does not play the frame data quickly or slowly, that is, intra-stream synchronization between the frame data is implemented.

Inter-stream synchronization means that play time of different data streams is synchronized. For example, the inter-stream synchronization may mean that play time of two different audio streams is synchronized. For another example, the inter-stream synchronization may mean that play time of two different video streams is synchronized. For another example, the inter-stream synchronization may mean that play time of an audio stream and a video stream is synchronized, and is also referred to as audio-to-image synchronization. In a case of audio-to-image synchronization, each frame of image being rendered by the video player one-to-one corresponds to each segment of sound being played by the audio player, and there is no deviation that can be distinguished by human ears and human eyes.

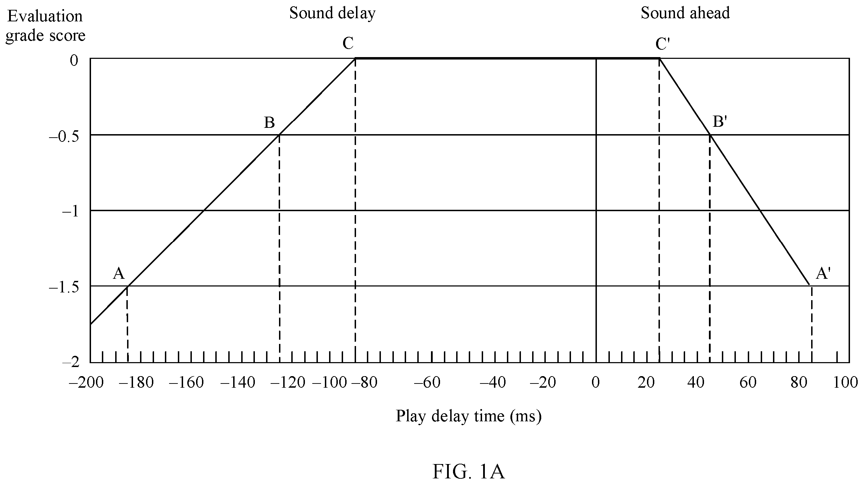

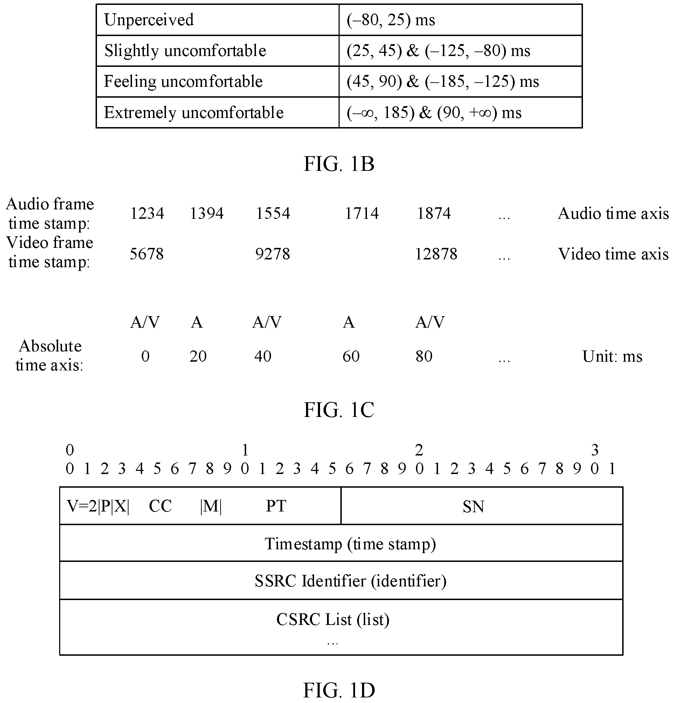

In a case of audio-to-image asynchronization, a user perceives that an image and a sound are not synchronized. As shown in FIG. 1A and FIG. 1B, in the industry, a degree of audio-visual asynchronization perceived by a human body is classified into four levels, and each level corresponds to a different play delay interval between an image and a sound. If a play delay is positive, the sound is played ahead of the image; if a play delay is negative, the sound is delayed before the image is played; and if the play delay is 0, the image and the image are played synchronously. When the play delay interval of the sound and the video is (C, C1), the level corresponding to the perceived degree is unperceivable, that is, when the play delay of the sound and the video is (-80, 25) ms, the human body cannot perceive that the picture and the sound are not synchronized. When the play delay interval of the sound and the video is (B, C) & (C1, B1), the level corresponding to the perceived degree is slightly uncomfortable, that is, when the play delay of the sound and the video is (25, 45) & (-125, -80) ms, the human body feels slightly uncomfortable when the image and the sound are not synchronized. When the play delay interval of the sound and the video is (B1, A1) & (A, B), the level corresponding to the perceived degree is uncomfortable, that is, when the play delay of the sound and the video is (45, 90) & (-185, - 125) ms, the human body feels severely uncomfortable when the image and the sound are not synchronized. When the play delay interval of the sound and the video is (-∞, A) & (A1, +∞), the level corresponding to the perceived degree is extremely uncomfortable, that is, when the sound and video play delay is (-∞, 185) and (90, +∞), the human body is extremely uncomfortable when perceiving that the image and the sound are not synchronized.

The time stamp carried in each data stream is determined based on an encoder system clock of a source device to which the data stream belongs. An audio stream and a video stream are used as an example of a data stream. A source device to which the audio stream belongs may record, based on a sampling frequency and a frame rate of the audio, a sampling time stamp of each audio frame in the audio stream and a time stamp interval between each audio frame and an adjacent audio frame. For example, the sampling frequency of the audio frame is 8000 Hz, the frame rate is 50 fps, and the time stamp interval of the audio frame is 160. Audio frame time stamps may form an audio time axis shown in FIG. 1C. Similarly, a source device to which the video stream belongs may record, based on a sampling frequency and a frame rate of the video, a sampling time stamp of each video frame in the video stream and a time stamp interval between each video frame and an adjacent video frame. For example, the sampling frequency is 90000 Hz, the frame rate is 25 fps, the time stamp interval of the video frame is 3600. Audio frame time stamps may form a video time axis shown in FIG. 1C. As shown in FIG. 1C, the audio frame time stamp and the video frame time stamp need to be mapped to a same absolute time axis of one or more play devices, so that the audio stream and the data stream can be played synchronously.
3. A source end device is a device generating a data stream. The source end device may be, for example, a mobile phone that generates a video stream and an audio stream, or may be a vehicle-mounted camera that generates a video stream.
4. A sink end device is a device using or playing a data stream. The sink end device may be, for example, one or more of a vehicle-mounted central display screen, a television set, or a vehicle-mounted speaker.
5. Clock synchronization The clock synchronization means adjusting clock values of different nodes to specific accuracy or specific tolerance, or adjusting an error between transmission start moments of time units of different nodes to a specific range. A unit of the time unit may be a hyper frame, a radio frame (radio frame), a symbol (symbol), another time unit, or the like. The hyper frame is a time unit including a plurality of radio frames, the radio frame is a time unit smaller than the hyper frame, and the symbol is a time unit smaller than the radio frame. For example, in a vehicle-mounted wireless short-range communication system, it is specified that a length of a radio frame is 1/48 ms=20.833 µs, each hyper frame includes 48 radio frames, and a length of each hyper frame is 1 ms. In a vehicle-mounted (or non-vehicle-mounted) wireless short-distance communication system, clock information of a terminal (terminal, T) node needs to be synchronized with clock information of a grant (grant, G) node. In this embodiment of this application, the node G may be a source end device or a sink end device. The G node and the T node herein are only a distinction for node functions, and do not limit specific node names. For example, the node may be a communication node in a SparkLink short-range communication standard, or may be a communication node in a short-range communication system like Bluetooth. A type of the communication system is not specifically limited in this application.
6. A real-time transport protocol (Real-time Transport Protocol, RTP) is used to provide end-to-end real-time transmission services for various streaming media data that needs to be transmitted in real time, such as audio, video, image, and fax. The source end device may generate a corresponding RTP packet based on the protocol. FIG. 1D shows a packet header format of the RTP packet. The packet header includes the following information:
   Version (Version, V): occupies 2 bits and identifies an RTP version used by the RTP packet.

Padding (Padding, P): occupies 1 bit and indicates whether a tail of the RTP packet includes an additional padding byte.

Extend (extend, X): occupies 1 bit and indicates an extension header of the RTP packet.

CSRC counter (CC): occupies 4 bits and indicates a quantity of CSRC after a fixed header of the RTP packet.

Mark (Mark, M): occupies 1 bit and identifies a start or an end of a payload, for example, for a video, a mark (M) marks the end of a frame in a payload; and for an audio, a mark (M) marks the start of a session.

Payload type (Payload Type, PT): occupies 7 bits and identifies the type of the payload in the RTP packet.

Sequence number (Sequence Number, SN): occupies 16 bits. A sender increases the value by 1 each time the sender sends an RTP packet. A receiver can determine the loss of RTP packets and the sequence of recovery packets based on the value. An initial value of the sequence number is randomly distributed.

Time stamp (Time Stamp, TS): occupies 32 bits and is used to record a sampling moment of a first byte of data in the RTP packet. When a session starts, the time stamp is initialized to an initial value, and the value of the time stamp increases with time. The time stamp is derived from the 90 kHz clock that is synchronized between the source end device and the program clock reference (program clock reference, PCR). The clock is synchronized to the PCR, which indicates the sampling moment of the first byte of the payload of the data packet. This value needs to be generated by a monotonically increasing clock so that synchronization and jitter calculation can be performed. If the RTP packet is generated periodically, a sampling moment of a sampling clock can be used as a time stamp value. For example, if the audio sampling frequency is 8000 Hz, 8000 points are sampled within one second and eight points are sampled per millisecond. If encapsulation duration of the RTP packet is 10 ms, 80 points are sampled within 10 ms. Therefore, a time stamp difference between RTP packets is 80. A unit of the time stamp is a sampling periodicity (namely, duration used for sampling a point), and the used clock is a sampling clock. Similar to the sequence number, an initial value of the time stamp should be generated randomly, and the time stamp increases to the maximum value and is reversed to 0.

Synchronization source identifier (Synchronization Source Identifier, SSRC Identifier): occupies 32 bits and identifies a synchronization source. The identifier is randomly selected, for example, two synchronization sources participating in a same video conference cannot have same SSRCs.

Contribution source list (Contributing Source List, CSRC List): includes 0 to 15 items. Each item occupies 32 bits and identifies source end devices of all RTP packets that contribute to a packet generated by an RTP mixer. These contributing CSRC identifiers are inserted into the table by the mixer. The CSRC identifiers are listed so that the receiver can correctly identify two parties to a conversation.

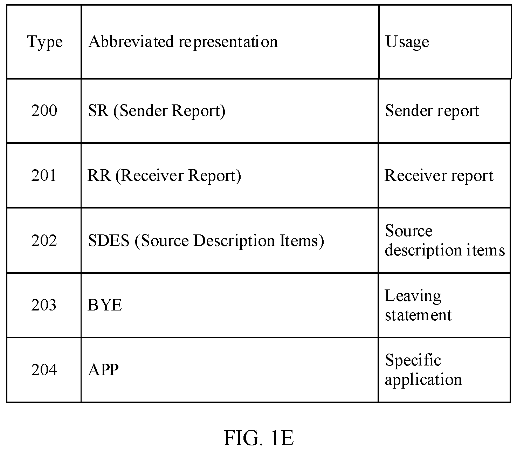

7. Real-time transport control protocol (Real-Time Transport Control Protocol, RTCP): The RTCP is needed to implement synchronization between RTP media. The main functions of the RTCP include quality of service monitoring and feedback, inter-media synchronization, and identification of multicast group members. During an RTP session, each session participant periodically sends RTCP control packets to all other participants. Each RTCP packet does not encapsulate audio data or video data, but encapsulates a statistical report of a transmitter and/or a receiver. As shown in FIG. 1E, based on a type of control information carried in an RTCP packet, the RTCP packet may be classified into a sender report (Sender Report, SR) packet, a receiver report (Receiver Report, RR) packet, a source description item (Source Description Item, SEDS) packet, a leaving statement (BYE) packet, and a special application (APP) packet.

In this embodiment of this application, the RTCP SR packet includes a first time stamp and a second time stamp, the first time stamp indicates device time information of the source end device, the second time stamp indicates a time sequence value corresponding to a system clock of a codec of the source end device, and the device time information of the source end device and the time sequence value that corresponds to the system clock of the codec of the source end device meet a first mapping relationship. In this way, after receiving the RTCP SR packet, the sink end device may map a sending time sequence of the data packet received by the sink end device to a time axis on which the device time information of the source end device is located.

In some embodiments of this application, the RTCP RR packet includes capability information of the sink end device, and the capability information of the sink end device carries a processing capability of the sink end device (that is, a delay required for performing some or more of processes such as decapsulation, decoding, and rendering on an RTP packet). In some other embodiments of this application, the RTCP RR packet may include the processing capability of the sink end device (that is, a delay required for performing processing such as encoding, decoding, and/or rendering on an RTP packet).

The following describes a communication system provided in this embodiment of this application with reference to specific accompanying drawings.

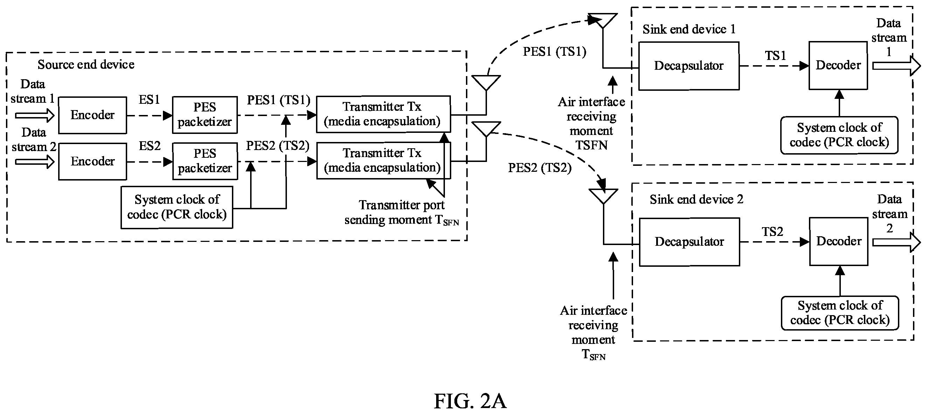

FIG. 2A is a diagram 1 of an architecture of a communication system according to an embodiment of this application. The system architecture includes a source end device, a sink end device 1, and a sink end device 2. The source end device includes an encoder, a packetized elementary stream (Packetized Elementary Stream, PES) packetizer, and a transmitter Txs. The sink end device 1 and the sink end device 2 each include a decapsulator and a decoder. The source end device generates a data stream 1 and a data stream 2. The encoder in the source end device encodes the data stream 1 to obtain a raw stream 1 (Elementary Stream, ES), and the raw stream 1 is also referred to as an encoding stream ES1. The PES packetizer packs the encoding stream ES1 and a system clock of a codec to obtain a corresponding PES1 packet. The PES1 packet includes a transport stream (Transport Stream, TS) 1. After encapsulating the PES1 packet based on a streaming media transmission related protocol (for example, an RTP), the transmitter Tx sends the encapsulated PES1 packet to the sink end device 1. The decapsulator in the sink end device 1 decapsulates the encapsulated PES1 packet to obtain the transport stream TS1. The decoder in the sink end device 1 decodes the TS1 to obtain the data stream 1 and plays the data stream 1.

Similarly, the encoder in the source end device encodes the data stream 2 to obtain an encoding stream ES2; and the PES packetizer packages the encoding stream ES2 and the system clock of the codec to obtain a corresponding PES2 packet, where the PES2 packet includes the TS2. After encapsulating the PES2 packet based on the streaming media transmission related protocol (for example, the RTP), the transmitter Tx sends the encapsulated PES2 packet to the sink end device 2. The decapsulator in the sink end device 2 decapsulates the encapsulated PES2 packet to obtain the TS2. The decoder in the sink end device 2 decodes the TS2 to obtain the data stream 2 and plays the data stream 2. Time at which the sink end device 1 plays the data stream 1 needs to be synchronized with time at which the sink end device 2 plays the data stream 2, to implement inter-stream synchronization between the data stream 1 and the data stream 2.

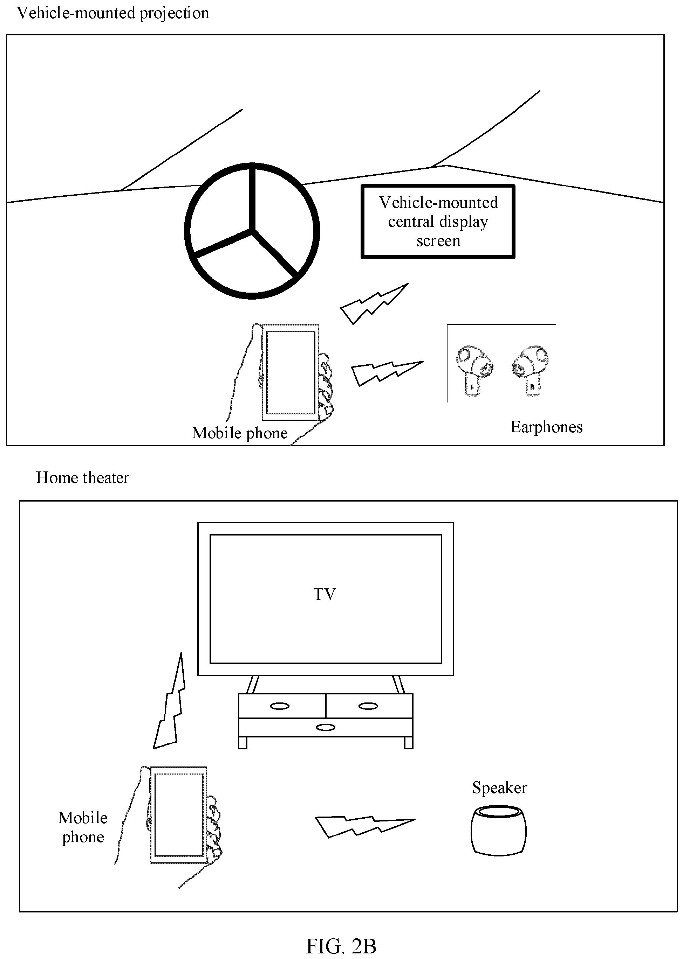

For example, as shown in FIG. 2B, in a vehicle-mounted projection scenario, for example, the source end device is a mobile phone, the sink end device 1 is a vehicle-mounted central display screen, and the sink end device 2 is earphones. After generating an audio stream and a video stream, the mobile phone sends the audio stream to the earphones, and sends the video stream to the vehicle-mounted central display screen. Audio play time of the earphones needs to be synchronized with video play time of the vehicle-mounted central display screen, to implement inter-stream synchronization between the audio stream and the video stream. In addition, in a home theater scenario, for example, the source end device is a mobile phone, the sink end device 1 is a television, and the sink end device 2 is a speaker. After generating an audio stream and a video stream, the mobile phone sends the audio stream to the speaker, and sends the video stream to the television. Audio play time of the speaker needs to be synchronized with video play time of the TV to implement inter-stream synchronization between the audio stream and the video stream.

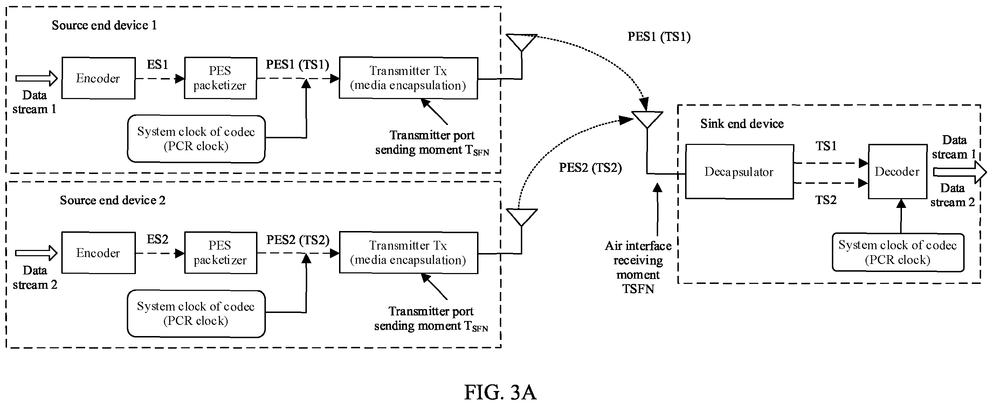

FIG. 3A is a diagram 2 of an architecture of a communication system according to an embodiment of this application. The system architecture includes a source end device 1, a source end device 2, and a sink end device. The source end device 1 and the source end device 2 each include an encoder, a PES packetizer, and a transmitter Tx, and the sink end device includes a decapsulator and a decoder. The source end device 1 generates a data stream 1. The encoder in the source end device encodes the data stream 1 to obtain an encoding stream ES1. A PES packetizer packs the encoding stream ES1 and a system clock of a codec to obtain a corresponding PES1 packet, where the PES1 packet includes a TS1. After encapsulating the PES1 packet based on a streaming media transmission related protocol (for example, an RTP), the transmitter Tx sends the encapsulated PES1 packet to the sink end device. The decapsulator in the sink end device decapsulates the encapsulated PES1 packet to obtain the TS1. The decoder in the sink end device decodes the TS1 to obtain the data stream 1 and plays the data stream 1.

Similarly, the source end device 2 generates a data stream 2, the encoder in the source end device 2 encodes the data stream 2 to obtain an encoding stream ES2, and the PES packetizer packs the encoding stream ES2 and the system clock of the codec to obtain a corresponding PES2 packet, where the PES2 packet includes a TS2. After encapsulating the PES2 packet based on a streaming media transmission related protocol (for example, the RTP), the transmitter Tx sends the encapsulated PES2 packet to the sink end device. The decapsulator in the sink end device decapsulates the encapsulated PES2 packet to obtain the TS2. The decoder in the sink end device decodes the TS2 to obtain the data stream 2 and plays the data stream 2. Time at which the sink end device plays the data stream 1 needs to be synchronized with time at which the sink end device plays the data stream 2, to implement inter-stream synchronization between the data stream 1 and the data stream 2.

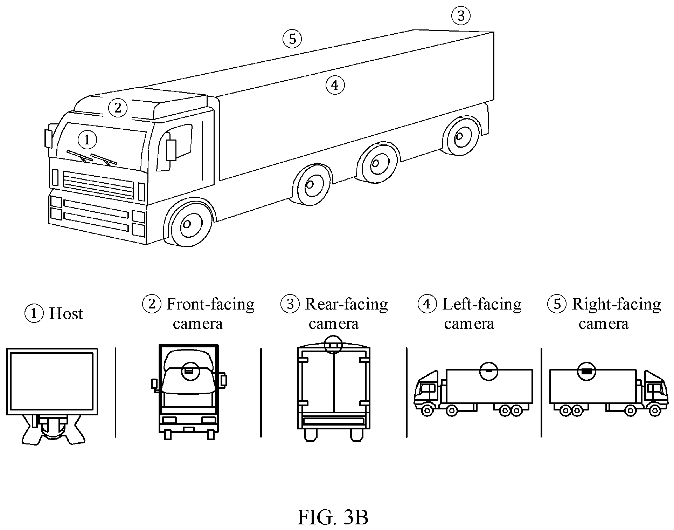

For example, as shown in FIG. 3B, in a vehicle-mounted surround-view scenario, a host, a front-facing camera, a rear-facing camera, a left-facing camera, and a right-facing camera are deployed on a vehicle. The front-facing camera, the rear-facing camera, the left-facing camera, and the right-facing camera are source end devices, and the host is a sink end device. After collecting a video data stream, the front-facing camera, the rear-facing camera, the left-facing camera, and the right-facing camera each send the video data stream to the host. The host synchronously plays the video data streams, to implement the vehicle-mounted surround-view scenario of a vehicle.

Therefore, how to implement inter-stream synchronization between different data streams is an urgent technical problem that needs to be resolved by a person skilled in the art.

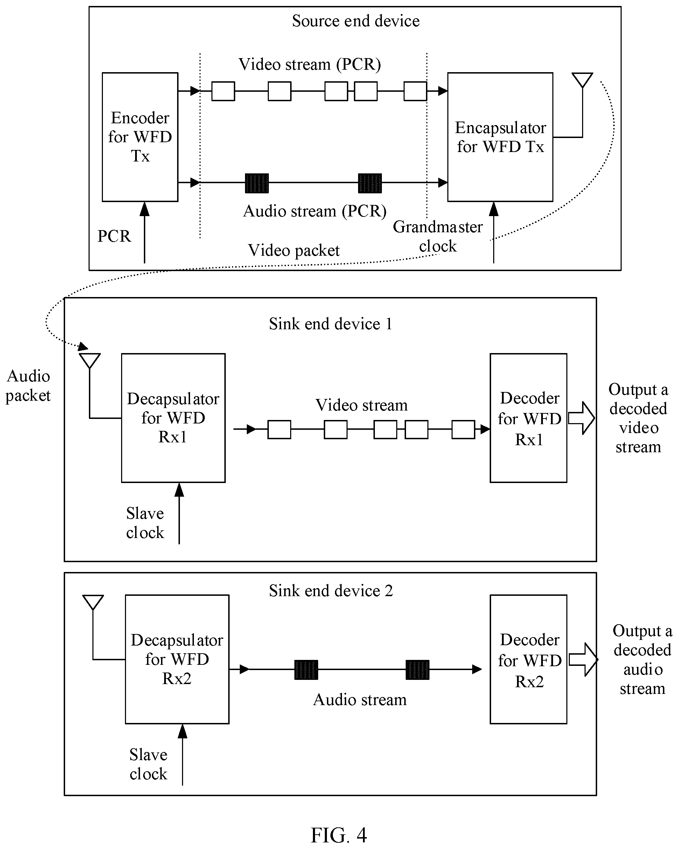

As shown in FIG. 4, to implement inter-stream synchronization between different data streams, some technical solutions are proposed in a wireless projection (Wi-Fi-display, WFD) scenario. If a wireless projection transmitter (WFD Tx), a wireless projection receiver 1 (WFD Rx1), and a wireless projection receiver 2 (WFD Rx2) all support a precision time protocol (generalized precise time protocol, gPTP), a manner shown in FIG. 4 may be used to implement audio-to-image synchronization. After the WFD Tx generates video data and audio data, a decoder of the WFD Tx obtains a program clock reference (Program Clock Reference, PCR), and encodes the video data to obtain a video stream, where the video stream carries a PCR; and the decoder of the WFD Tx encodes the audio data to obtain an audio stream, where the audio stream carries a PCR. An encapsulator of the WFD Tx may further select a grandmaster clock (Grandmaster Clock) as a time reference of an entire wireless communication system, encapsulate the audio stream based on the grandmaster clock to obtain an audio packet, and encapsulate the video stream based on the grandmaster clock to obtain a video packet. Then, the WFD Tx sends the video packet and the audio packet to the WFD Rx.

The decapsulator in the WFD Rx1 may obtain local clock information of the WFD Rx1, and use the clock information as a slave clock (Slave Clock). The decapsulator in the WFD Rx1 may correct the slave clock based on the received grandmaster clock, to implement synchronization (that is, phase synchronization and frequency synchronization) between the slave clock and the grandmaster clock. Similarly, the decapsulator in the WFD Rx2 may obtain local clock information of the WFD Rx2, and use the clock information as a slave clock. The decapsulator in the WFD Rx2 may correct the slave clock based on the received grandmaster clock, to implement synchronization between the slave clock and the grandmaster clock.

After the grandmaster clock and the slave clock are synchronized, the decapsulator in the WFD Rx1 decapsulates the video packet to obtain a video stream, and the decoder in the WFD Rx1 may decode and output the video stream. After the grandmaster clock and the slave clock are synchronized, the decapsulator in the WFD Rx2 decapsulates the audio packet to obtain an audio stream, and the decoder in the WFD Rx1 may decode and output the audio stream. In this way, the video stream and the audio stream can be played synchronously, thereby implementing audio-to-image synchronization.

The foregoing technical solution depends on specific gPTP hardware implementation, a synchronization protocol, and protocol implementation precision. For a device that does not support gPTP, inter-stream synchronization between different data streams cannot be implemented. In addition, gPTP needs to be implemented by using a dedicated chip, and consequently, costs and complexity of inter-stream synchronization are high.

In view of this, an embodiment of this application provides a data transmission method, to implement inter-stream synchronization between different data streams of separated sink end devices. The method includes: A first device sends a first packet to a second device, sends a second packet to a third device, and sends third packets to the second device and the third device, where the third packet includes a first time stamp and a second time stamp, the first time stamp indicates device time information of the first device, and the second time stamp indicates time sequence value corresponding to a system clock of a codec of the first device. The device time information of the first device and the time sequence value that corresponds to the system clock of the codec of the first device meet a first mapping relationship. After receiving the third packet, the second device may map, based on the device time information of the first device and the time sequence value that corresponds to the system clock of the codec of the first device, a sampling time sequence of a first data stream to a first moment on a time axis on which the device time information is located. Similarly, after receiving the third packet, the third device may map, based on the device time information of the first device and the time sequence value that corresponds to the system clock of the codec of the first device, a sampling time sequence of a second data stream to a third moment on the time axis on which the device time information of the first device is located. In this way, the sampling time sequence of the first data stream and the sampling time sequence of the second data stream are converted to a same time axis, so that actual sending moments and/or processing moments of the first packet and the second packet are correspondingly adjusted, to implement inter-stream synchronization between the first data stream in the first packet and the second data stream in the second packet.

Embodiments of this application is applied to various wireless communication scenarios, especially a short-range wireless communication scenario, including but not limited to a scenario, for example, a smart car, smart transportation, a smart terminal, a smart home, and smart manufacturing. The short-range wireless communication technology may include a conventional short-range wireless communication technology, for example, a Bluetooth (Bluetooth) technology, a Bluetooth low energy (Bluetooth Low Energy, BLE) technology, a wireless fidelity (Wireless Fidelity, Wi-Fi) technology, a near field communication (Near Field Communication, NFC) technology, an ultra-wideband (Ultra-WideBand, UWB) technology, a universal short-range communication technology, or the like, and may also include an evolving communication technology or another communication technology that may emerge in the future, for example, a short-range wireless communication technology (briefly referred to as SparkLink (SparkLink) technology) specified by the SparkLink Alliance. The SparkLink technology includes a SparkLink basic (SparkLink Basic, SLB) technology, a SparkLink Low Energy (SparkLink Basic, SLE) technology, and the like. This is not limited in this application.

### Embodiment 1

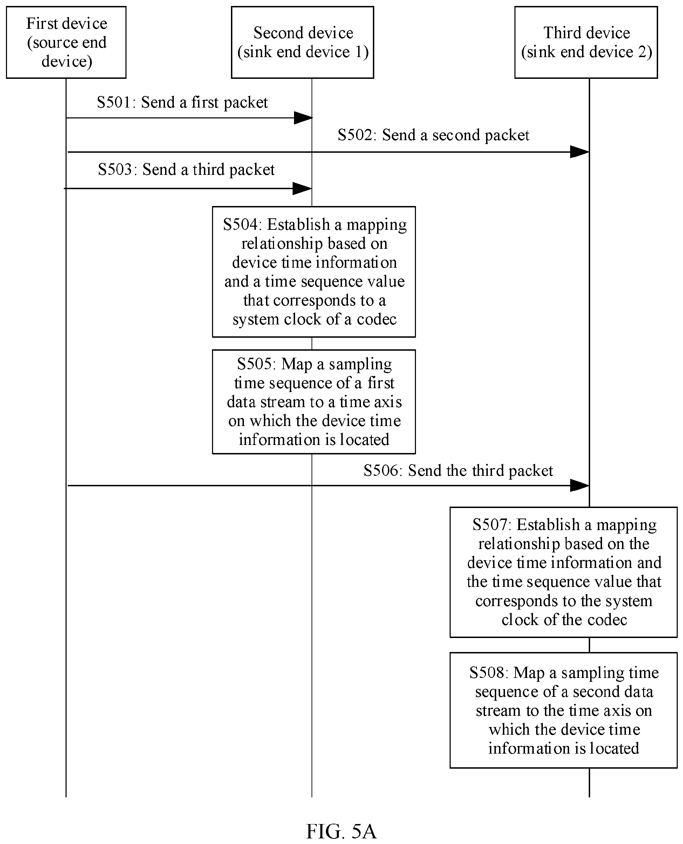

FIG. 5A shows a data transmission method according to an embodiment of this application. The method is applied to the system architecture shown in FIG. 2A. In other words, the method is applicable to a scenario of inter-stream synchronization between different data streams between one source end device and a plurality of sink end devices. Correspondingly, an example in which a first device is the source end device in FIG. 2A, a second device is the sink end device 1 in FIG. 2A, and a third device is the sink end device 2 in FIG. 2A is used. The method includes the following steps.

S501: The first device sends a first packet to the second device. Correspondingly, the second device receives the first packet. The first packet includes a first data stream and a sampling time sequence of the first data stream.

S502: The first device sends a second packet to the third device. Correspondingly, the third device receives the second packet. The second packet includes a second data stream and a sampling time sequence of the second data stream.

In this embodiment of this application, the sampling time sequence of the first data stream and the sampling time sequence of the second data stream are time sequences whose values each are in a unit of a system clock of a codec of the first device. In other words, the sampling time sequence of the first data stream is a sampling time stamp obtained by sampling the first data stream at a preset frame rate by using the system clock of the codec of the first device as reference time; and the sampling time sequence of the second data stream is a sampling time stamp obtained by sampling the second data stream at a preset frame rate by using the system clock of the codec of the first device as reference time.

It may be understood that the first device may periodically send the first packet to the second device, and the first device may periodically send the second packet to the third device. It can be learned from the foregoing that the first packet represents a plurality of packets or a series of packets that meet a same attribute, and the same attribute of any one of the plurality of packets or the series of packets is as follows: The packet is sent by the first device to the second device, includes the first data stream and the sampling time sequence of the first data stream, and corresponds to a first communication protocol. The second packet represents a plurality of packets or a series of packets that meet a same attribute, and the same attribute of any one of the plurality of packets or the series of packets is as follows: The packet is sent by the first device to the third device, includes the second data stream and the sampling time sequence of the second data stream, and corresponds to the first communication protocol. The first data stream and the second data stream may be audio streams or video streams. For example, the first data stream and the second data stream are audio streams of different sound channels. For another example, the first data stream is a video stream, and the second data stream is an audio stream.

In this embodiment of this application, the first packet and the second packet correspond to the first communication protocol, and the first communication protocol may be, for example, RTP. "The first packet and the second packet correspond to the first communication protocol" may be understood as that the first packet and the second packet are encapsulated according to the first communication protocol.

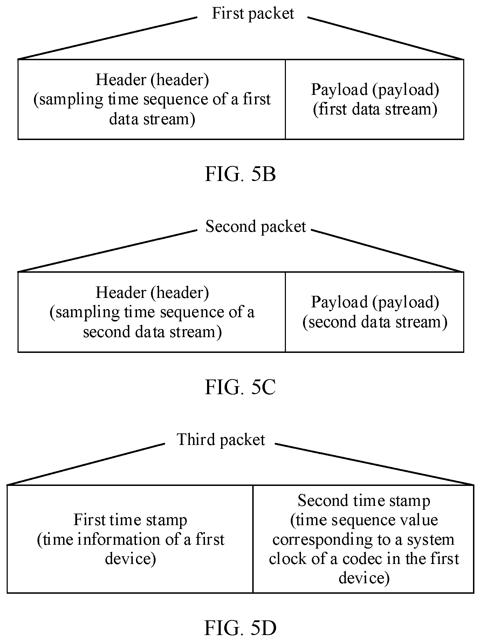

For example, when the first packet is an RTP packet, a format of the first packet is shown in FIG. 5B; and when the second packet is an RTP packet, a format of the second packet is shown in FIG. 5C. Optionally, a specific encapsulation format of the first packet and the second packet may be an MPEG-2 TS format, where the format includes a packetized elementary stream (Packetized Elementary Streams, PES) layer and a transport stream (Transport Stream, TS) layer. At the PES layer, PES header information includes a presentation time stamp (Presentation Time Stamp, PTS) and a decoding time stamp (Decoding Time Stamp, DTS). At the TS layer, TS header information includes a program clock reference (Program Clock Reference, PCR), and the PCR is used to recover a system time clock (System Time Clock, STC) consistent with that at an encoder side. An interaction between the DTS, the PTS, and the PCR is to decode and display data streams at correct time. In this way, an audio and a video are synchronized with system time, and the audio and the video are synchronized objectively.

S503: The first device sends a third packet to the second device. Correspondingly, the second device receives the third packet.

The third packet includes a first time stamp and a second time stamp, the first time stamp indicates device time information of the first device, the second time stamp indicates a time sequence value corresponding to the system clock of the codec, and the device time information and the time sequence value that corresponds to the system clock of the codec meet a first mapping relationship.

The device time information of the first device represents air interface time of the first device. For example, the device time information of the first device may be a clock that is based on a 48 kHz sampling sequence value and that is exported through air interface synchronization of the first device.

In this embodiment of this application, the third packet corresponds to a second communication protocol, and the second communication protocol may be, for example, the RTCP. In other words, the third packet is encapsulated according to the second communication protocol.

For example, when the third packet is an RTCP SR packet, a packet header format of the third packet is shown in FIG. 5D. The third packet includes the first time stamp and the second time stamp. The first time stamp indicates the device time information of the first device, and the second time stamp indicates the time sequence value corresponding to the system clock of the codec of the first device.

In this embodiment of this application, the first device periodically sends the third packet to the second device.

In this embodiment of this application, before separately sending the third packet to the second device and the third device, the first device needs to obtain the device time information of the first device. In a possible implementation, the first device may obtain the device time information by using an inter-layer primitive of a protocol stack. In this way, it is easy to obtain the device time information of the first device. This improves efficiency of subsequent inter-stream synchronization between different data streams. In addition, this manner does not depend on a specific protocol. This effectively reduces complexity and costs of the solution.

In a possible implementation, the protocol stack includes a first protocol layer, a second protocol layer, and a third protocol layer; and correspondingly, that the first device obtains the device time information includes: The first protocol layer sends a first inter-layer primitive to the second protocol layer, where the first inter-layer primitive is used by the first protocol layer to request the second protocol layer to query the device time information; the second protocol layer sends a second inter-layer primitive to the third protocol layer, where the second inter-layer primitive is used by the second protocol layer to request the third protocol layer to query the device time information; the second protocol layer receives a third inter-layer primitive from the third protocol layer, where the third inter-layer primitive is used by the third protocol layer to indicate the device time information to the second protocol layer; and the first protocol layer receives a fourth inter-layer primitive from the second protocol layer, where the fourth inter-layer primitive is used by the second protocol layer to indicate the device time information to the first protocol layer.

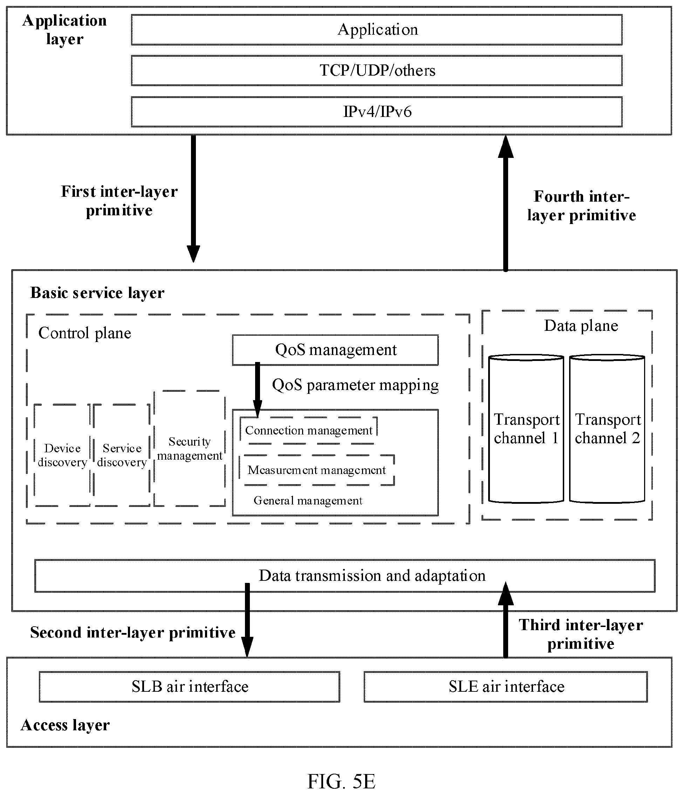

For example, FIG. 5E is a diagram of a protocol stack according to an embodiment of this application. The protocol stack sequentially includes the following from top to bottom.
1. An application layer (corresponding to the first protocol layer) is located above a basic service layer, and may be deployed with several APP/service instances, and may be used to provide a service for an application program (also referred to as an application or a user). Optionally, the application layer may be further used to provide support for protocols such as TCP/UDP and IPv4/IPv6.
2. The basic service layer (corresponding to the second protocol layer) is located above an access layer, and is used to establish a transport channel between nodes, and provide an end-to-end information transmission service. For example, the basic service layer may provide functional units of a control plane such as a QoS management functional unit, a connection management unit, a device discovery functional unit, a service discovery functional unit, a security management functional unit, and a measurement management functional unit.
   (1) The QoS management functional unit is a logical functional entity, and is used to determine, based on factors such as a service transmission requirement and a network status, the quality of service that needs to be provided by a SparkLink wireless communication system, to ensure that a transmission capability of the SparkLink wireless communication system matches the service requirement. For example, the QoS management functional unit may be responsible for negotiating and determining a QoS parameter. When service data needs to be transmitted at an application layer of a transmitter, information like a service type, a SparkLink port number, and a service-associated QoS parameter (Flow Label, ToS) is delivered to a QoS management functional unit, and the QoS management functional unit at the transmitter negotiates, based on the received parameter, with a peer QoS management functional unit about a QoS parameter required for transmission, to determine an SLQI.
   (2) The connection management functional unit is a logical functional entity that supports functions such as establishment, update, and deletion of a transport channel, maintenance of a mapping relationship between a service port and a transport channel, and maintenance of a mapping relationship between a transport channel and an access layer logical channel. For example, the connection management functional unit may start establishment or update of a transport channel based on a QoS parameter negotiated by the QoS management functional unit, and feed back information about the established or updated transport channel to a network layer for storage and maintenance.
   (3) The device discovery functional unit is a logical functional entity, and is used to expose existence of the device discovery functional unit or discover a peripheral device.
   (4) The service management functional unit is a logical functional entity, and is used for service management and maintenance inside a device and service discovery between devices.
   (5) The measurement management functional unit supports triggering of measurement of physical layer signal quality at the access layer and performance of an existing transport channel, provides a unified measurement service interface for another functional unit (for example, the QoS management functional unit and a 5G convergence functional unit) inside a device or an authorized application. A corresponding functional unit is allowed to provide configuration information about expected measurement to the measurement management functional unit and query a measurement result.
   It may be understood that the several functional units of the control plane are only examples rather than limitations, and there may be other functional units actually. In addition to providing the related functions of the control plane, the basic service layer may further provide a function of a data plane (or referred to as a user plane). For example, the basic service layer may query local time of the access layer by using an inter-layer primitive.
3. The access layer (corresponding to the third protocol layer) may provide a communication interface/means for communication between the nodes. The access layer may include a plurality of different access technologies, and different access technologies may correspond to different communication interfaces such as an SLB air interface and an SLE air interface. Correspondingly, there is air interface time of the first device at the access layer.

It should be understood that the protocol layers are only framework structure division. Different communication systems may have respective layer division manners, or may have more specific and lower-level layer division. This is not specifically limited herein. In addition, a name of each protocol layer is only an example, and may alternatively be another name in actual application. A protocol layer may be considered as a protocol layer in this embodiment of this application provided that a function of the protocol layer is the same as or similar to a function of the protocol layer in this embodiment of this application.

Therefore, the application layer sends the first inter-layer primitive to the basic service layer, where the first inter-layer primitive is used by the application layer to request the basic service layer to query the device time information; the basic service layer sends the second inter-layer primitive to the third protocol layer, where the second inter-layer primitive is used by the basic service layer to request the access layer to query the device time information; the basic service layer receives the third inter-layer primitive from the access layer, where the third inter-layer primitive is used by the access layer to indicate device time information to the basic service layer; and the application layer receives the fourth inter-layer primitive from the basic service layer, where the fourth inter-layer primitive is used by the basic service layer to indicate the device time information to the application layer.

For example, the first inter-layer primitive may be a LocalTime.request inter-layer primitive, and the LocalTime.request inter-layer primitive is used by the application layer to request the basic service layer to query the device time information of the access layer. A definition of the LocalTime.request primitive is as follows. For details, refer to related descriptions in Table 1.

```
     Local Time.request (
     Version,
     Source unit,
     Local Index,
     Virtual local time index,
     )
```

**Table 1**

| Name | Description |
|---|---|
| Version | Integer, value ranging from 0 to 15, set a current standard version to 0 |
| Source unit | Integer, value ranging from 0 to 65535, indicating a functional entity that initiates a request locally, 0 indicates a QoS management functional unit, 1 indicates a 5G convergence functional unit, and 2 indicates a request time unit |
| Local Index | Integer, value ranging from 0 to 65535, local internal maintenance, used to uniquely index a measurement result inquiry request in a measurement service interface |
| Virtual local time index | Virtual local time of the current inquiry |

The second inter-layer primitive may be a SparkLinkVirtualLocalTime.inquiry primitive that is used by the basic service layer to request the access layer to query device time information. A definition of the SparkLinkVirtualLocalTime.inquiry primitive is as follows. For details, refer to related descriptions in Table 2.

```
     SparkLinkVirtualLocalTime.inquiry (
     Version,
     Target,
     Targetlayer2ID,
     Local Index,
     Inquiry Mode,
     Inquiry Duration, (optional)
     Response_Num, (optional)
     Inquiry Interval, (optional)
     Virtual local time index,
     )
```

**Table 2**

| Name | Description |
|---|---|
| Version | Integer, value ranging from 0 to 15, set a current standard version to 0 |
| Target | Integer, indicating a target media access entity that initiates the access layer parameter inquiry locally, 0 indicates a management entity at the data link layer of the SLB access layer, 1 indicates a management entity at the data link layer of the SLE access layer, and 2 indicates management entities at the data link layers of the SLB and SLE access layers |
| Local Index | Integer, value ranging from 0 to 65535, local internal maintenance, used to uniquely index an access-layer measurement parameter inquiry process in a cross-layer interface |
| TargetLayer2ID | Bit string, 48 bits, a media access layer identifier of a peer SparkLink device |
| Inquiry Mode | Indicating the inquiry mode, including: |
| | 0x00: indicates periodic inquiry report mode, and |
| | 0x01: indicates event-triggered inquiry report mode |
| Virtual local time index | Index=1: indicates that the virtual local time of a current access layer is queried |

The third inter-layer primitive may be an SparkLinkASParametersInquiry.response primitive that is used by the access layer to reply the device time information requested the basic service layer to query. A definition of the SparkLinkASParametersInquiry.response primitive is as follows. For details, refer to related descriptions in Table 3.

```
     SparkLinkVirtualLocalTimeInquiry.response(
     Version,
     Target,
     Local Index,
     TargetLayer2ID,
     Status,
     Response_SN, (optional)
     Virtual local time value,
               )
                                             
```

**Table 3**

| Name | Description |
|---|---|
| Version | Integer, value ranging from 0 to 15, set a current standard version to 0 |
| Target | Integer, indicating a target media access entity that initiates the access layer parameter inquiry locally, 0 indicates a management entity at the data link layer of the SLB access layer, 1 indicates a management entity at the data link layer of the SLE access layer, and 2 indicates management entities at the data link layers of the SLB and SLE access layers |
| Local Index | Integer, value ranging from 0 to 65535, local internal maintenance, used to uniquely index an access-layer measurement parameter inquiry process in a cross-layer interface |
| TargetLayer2ID | Bit string, 48 bits, a media access layer identifier of a peer SparkLink device |
| Status | Indicating whether the inquiry is successful, |
| | 0 indicates that the inquiry is successful and a parameter value in the inquiry request is carried, and |
| | 1 indicates "not found", that is, no matched parameter value is found, and no parameter value is carried |
| Response_SN | Integer, value ranging from 1 to 65535, indicating a sequence number of an inquiry response message within the inquiry duration Inquiry Duration. |
| Virtual local time value | Index=1: indicates that the virtual local time of a current access layer is queried |

The fourth inter-layer primitive is LocalTime.response, and LocalTime.response is used by the basic service layer to reply the local time information requested the application layer to query. A definition of the LocalTime.response primitive is as follows. For details, refer to related descriptions in Table 4.

```
     Local Time.response (
     Version,
     Local Index,
     Status,
     Virtual local time value,)
```

**Table 4**

| Name | Description |
|---|---|
| Version | Integer, value ranging from 0 to 15, set a current standard version to 0 |
| Local Index | Integer, value ranging from 0 to 65535, local internal maintenance, used to uniquely index a measurement result inquiry request in a measurement service interface |
| Status | Indicating whether the measurement result inquiry is successful, 0x00 indicates the inquiry is successful and a measurement result in the inquiry is carried, and 0x01 indicates "not found", that is, no corresponding measurement result is found, and no measurement result is carried |
| Virtual local time value | Index=1: indicates that the virtual local time of a current access layer is queried |

S504: The second device establishes a mapping relationship based on the device time information and the time sequence value that corresponds to the system clock of the codec.

For example, the second device may obtain the following mapping relationship by performing linear regression on the device time information and the time sequence value that corresponds to the system clock of the codec: TSFN=f(S_TSFN)=k*S_TSFN+b.

TSFN is the device time information, and S_TSFN is the time sequence value corresponding to the system clock of the codec.

For example, the device time information may be, for example, a clock that is exported through local air interface synchronization of the source end device based on a 48 kHz sampling sequence value, and the time sequence value corresponding to the system clock of the codec may be, for example, a time sequence value generated based on a 48 kHz system clock.

S505: The second device maps the sampling time sequence of the first data stream to a time axis on which the device time information is located.

It may be understood that the second device maps the sampling time sequence of the first data stream to the time axis on which the device time information is located, in other words, the second device converts the sampling time sequence of the first data stream to the time axis on which the device time information is located, so that the converted sampling time sequence of the first data stream and the device time information are on a same time axis.

S506: The first device sends the third packet to the third device. Correspondingly, the third device receives the third packet.

S507: The third device establishes the first mapping relationship based on the device time information and the time sequence value that corresponds to the system clock of the codec. This step is optional, and the first mapping relationship is implicit, and there may be no independent establishment process.

S508: The third device maps the sampling time sequence of the second data stream to the time axis on which the device time information is located.

In the embodiment shown in FIG. 5A, the first packet includes the first data stream and the sampling time sequence of the first data stream, and the second packet includes the second data stream and the sampling time sequence of the second data stream. The sampling time sequence of the first data stream and the sampling time sequence of the second data stream are mapped to the time axis on which the device time information is located, so that the second device can correspondingly adjust a processing moment of the first packet based on the mapped sampling time sequence of the first data stream, and the third device can correspondingly adjust a processing moment of the second packet based on the mapped sampling time sequence of the second data stream. In this way, time at which the second device plays the first data stream is synchronized with time at which the third device plays the second data stream, implementing inter-stream synchronization between the first data stream and the second data stream.

It may be understood that, the sink end device needs to perform decoding and rendering based on frame rates of the first data stream and the second data stream, to ensure smooth play. On this basis, a relative delay between the first data stream and the second data stream needs to be calculated, and related processing moments of the first data stream and the second data stream need to be adjusted correspondingly, to implement inter-stream synchronization between the first data stream and the second data stream. There are transmission delays for the first packet and the second packet, and a transmission delay of the first packet may be different from a transmission delay of the second packet. To implement inter-stream synchronization between the first data stream in the first packet and the second data stream in the second packet, the transmission delay of the first packet and the transmission delay of the second packet need to be considered.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the second device receives the any packet, and the sending time of the first packet is time at which the first device sends the any packet to the second device. Correspondingly, an actual sending moment of the first packet is sending time of one or more packets that are in the first packet and that are sent after the any packet. Therefore, "the first device adjusts the actual sending moment of the first packet based on a first delay difference" may be understood as that the first device adjusts, based on the first delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the third device receives the any packet, and the sending time of the any packet is time at which the first device sends the any packet to the third device. Correspondingly, an actual sending moment of the second packet is sending time of one or more packets that are in the second packet and that are sent after the any packet. Therefore, "the first device adjusts the actual sending moment of the first packet based on the first delay difference" may be understood as that the first device adjusts, based on the first delay difference, the sending time of the one or more packets that are in the second packet and that are sent after the any packet.

In a possible implementation, the second device maps, based on the device time information and the time sequence value that corresponds to the system clock of the codec, the sampling time sequence of the first data stream to a first moment on the time axis on which the device time information is located, where the sampling time sequence of the first data stream and the first moment meet the first mapping relationship; the second device maps, based on the device time information and the time sequence value that corresponds to the system clock of the codec, receiving time of the first packet to a second moment on the time axis on which the device time information is located, where the receiving time of the first packet and the second moment meet the first mapping relationship; the second device determines the transmission delay of the first packet based on the first moment and the second moment; and the second device sends first information to the first device, where the first information indicates the transmission delay of the first packet. Similarly, the third device maps, based on the device time information and the time sequence value that corresponds to the system clock of the codec, the sampling time sequence of the second data stream to a third moment on the time axis on which the device time information is located, where the sampling time sequence of the second data stream and the third moment meet the first mapping relationship; the third device maps, based on the device time information and the time sequence value that corresponds to the system clock of the codec, receiving time of the second packet to a fourth moment on the time axis on which the device time information is located and the receiving time of the second packet and the fourth moment meet the first mapping relationship; and the third device determines the transmission delay of the second packet based on the third moment and the fourth moment, and sends second information to the first device, where the second information indicates the transmission delay of the second packet. Correspondingly, the first device may receive the first information and the second information, and determine the first delay difference between the transmission delay of the first packet and the transmission delay of the second packet based on the transmission delay of the first packet and the transmission delay of the second packet.

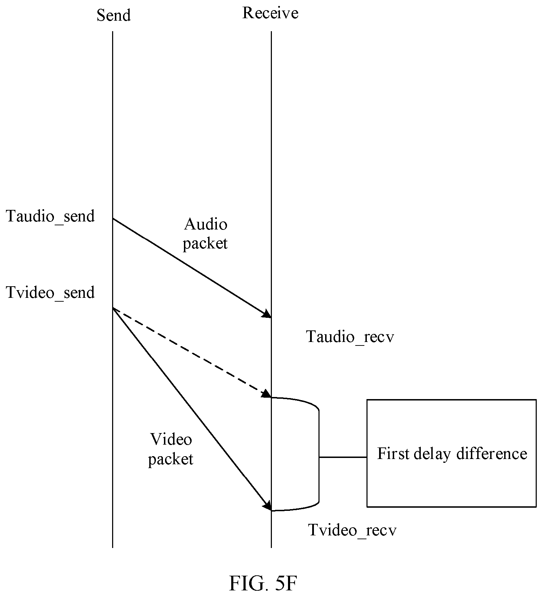

First delay difference=Transmission delay of the first packet-Transmission delay of the second packet. For example, the first packet is a video packet, and the second packet is an audio packet. As shown in FIG. 5F, a transmission delay (delay_video) of the video packet=receiving time (Tvideo_recv) of the video packet-sending time (Tvideo_send) of the video packet, and a transmission delay (delay_audio) of the video packet=receiving time (Taudio_reev) of the audio packet-receiving time (Taudio_send) of the audio packet. Correspondingly, first delay difference=transmission delay (delay_video) of the video packet-transmission delay (delay_audio) of the audio packet.

In a possible implementation, the first device may adjust, based on the first delay difference, the actual sending moment of the first packet or the actual sending moment of the second packet, so that time at which the second device plays the first data stream is synchronized with time at which the third device plays the second data stream.

It may be understood that, it is assumed that the sending time of the first packet is the same as the sending time of the second packet, and the first delay difference is positive, the transmission delay of the first packet is greater than the transmission delay of the second packet, that is, the time at which the first packet is received by the sink end device (namely, the second device) corresponding to the first packet is later than the time at which the second packet is received by the sink end device (namely, the third device) corresponding to the second packet. Therefore, the first device needs to adjust the actual sending moment of the first packet to a moment that is the first delay difference earlier than the actual sending moment of the second packet, so that the time at which the first packet is received by the sink end device (namely, the second device) corresponding to the first packet is the same as the time at which the second packet is received by the sink end device (namely, the third device) corresponding to the second packet. Alternatively, the first device needs to adjust the actual sending moment of the second packet to a moment that is the delay difference later than the actual sending moment of the second packet, so that the time at which the first packet is received by the sink end device (namely, the second device) corresponding to the first packet is the same as the time at which the second packet is received by the sink end device (namely, the third device) corresponding to the second packet. Example 1: If the first delay difference is 50 ms, the first device may adjust the actual sending moment of the first packet to a moment that is 50 ms earlier than the actual sending moment of the second packet, so that the time at which the first packet is received by the second device is the same as the time at which the second packet is received by the third device, thereby implementing time synchronization between playing the first data stream by the second device and playing the second data stream by the third device. Example 2: If the first delay difference is 20 ms, the first device may adjust the actual sending moment of the second packet to a moment that is 20 ms later than the actual sending moment of the first packet, so that the time at which the first packet is received by the second device is the same as the time at which the second packet is received by the third device, thereby implementing time synchronization between playing the first data stream by the second device and playing the second data stream by the third device.

It may be understood that, it is assumed that the sending time of the first packet is the same as the sending time of the second packet, and the first delay difference is negative, the transmission delay of the first packet is less than the transmission delay of the second packet, that is, the time at which the first packet is received by the sink end device (namely, the second device) corresponding to the first packet is earlier than the time at which the second packet is received by the sink end device (namely, the third device) corresponding to the second packet. Therefore, the first device needs to adjust the actual sending moment of the first packet to a moment that is the first delay difference later than the actual sending moment of the second packet, so that the time at which the first packet is received by the sink end device (namely, the second device) corresponding to the first packet is the same as the time at which the second packet is received by the sink end device (namely, the third device) corresponding to the second packet. Alternatively, the first device needs to adjust the actual sending moment of the second packet to a moment that is the delay difference earlier than the actual sending moment of the second packet, so that the time at which the first packet is received by the sink end device (namely, the second device) corresponding to the first packet is the same as the time at which the second packet is received by the sink end device (namely, the third device) corresponding to the second packet. Example 1: If the first delay difference is -50 ms, the first device may adjust the actual sending moment of the first packet to a time sequence that is 50 ms later than the actual sending moment of the second packet, so that the time at which the first packet is received by the second device is the same as the time at which the second packet is received by the third device, thereby implementing time synchronization between playing the first data stream by the second device and playing the second data stream by the third device. Example 2: If the first delay difference is -20 ms, the first device may adjust the actual sending moment of the second packet to a time sequence that is 20 ms earlier than the actual sending moment of the first packet, so that the time at which the first packet is received by the second device is the same as the time at which the second packet is received by the third device, thereby implementing time synchronization between playing the first data stream by the second device and playing the second data stream by the third device.

It may be understood that, it is assumed that the sending time of the first packet is the same as the sending time of the second packet, and the first delay difference is 0, the transmission delay of the first packet is equal to the transmission delay of the second packet, that is, the time at which the first packet is received by the sink end device (namely, the second device) corresponding to the first packet is the same as the time at which the second packet is received by the sink end device (namely, the third device) corresponding to the second packet. Therefore, the first device does not need to adjust the actual sending moment of the first packet and the actual sending moment of the second packet.

In another possible implementation, the first device sends third information to the second device or the third device, where the third information indicates the first delay difference; and the second device may adjust the processing moment of the first packet based on the first delay difference, or the third device may adjust the processing moment of the second packet based on the first delay difference, so that the time at which the second device plays the first data stream is synchronized with the time at which the third device plays the second data stream.

It may be understood that the processing moment of the first packet is a start moment at which the second device processes the first packet. The processing moment of the second packet is a start moment at which the third device processes the second packet. In this implementation, it is assumed that the processing delays of the first packet and the second packet are the same. Therefore, when the first delay difference is not zero, the second device may adjust the processing moment of the first packet based on the moment of the first delay difference; or the third device may adjust the processing moment of the second packet based on the moment of the first delay difference. In this way, a moment at which the sink end device (namely, the second device) corresponding to the first packet finishes processing the first packet is the same as a moment at which the sink end device (namely, the third device) corresponding to the second packet finishes processing the second packet, thereby implementing time synchronization between playing the first data stream by the second device and playing the second data stream by the third device.

When the first delay difference is positive, the second device adjusts the processing moment of the first packet to a moment that is the first delay difference earlier than the processing moment of the second packet; or when the first delay difference is positive, the third device adjusts the processing moment of the second packet to a moment that is the first delay difference later than the processing moment of the first packet. Example 1: If the first delay difference is 50 ms, the second device may adjust the processing moment of the first packet to a moment that is 50 ms earlier than the processing moment of the second packet, so that the moment at which the second device finishes processing the first packet is the same as the moment at which the third device finishes processing the second packet, thereby implementing time synchronization between playing the first data stream by the second device and playing the second data stream by the third device. Example 2: If the first delay difference is 20 ms, the third device may adjust the processing moment of the second packet to a moment that is 20 ms later than the processing moment of the second packet, so that the moment at which the second device finishes processing the first packet is the same as the moment at which the third device finishes processing the second packet, thereby implementing time synchronization between playing the first data stream by the second device and playing the second data stream by the third device.

When the first delay difference is negative, the second device adjusts the processing moment of the first packet to a moment that is the first delay difference later than the processing moment of the second packet; or when the first delay difference is negative, the third device adjusts the processing moment of the second packet to a moment that is the first delay difference earlier than the processing moment of the first packet. Example 1: If the first delay difference is -50 ms, the second device may adjust the processing moment of the first packet to a moment that is 50 ms later than the processing moment of the second packet, so that the moment at which the second device finishes processing the first packet is the same as the moment at which the third device finishes processing the second packet, thereby implementing time synchronization between playing the first data stream by the second device and playing the second data stream by the third device. Example 2: If the first delay difference is -20 ms, the third device may adjust the processing moment of the second packet to a moment that is 20 ms earlier than the processing moment of the second packet, so that the moment at which the second device finishes processing the first packet is the same as the moment at which the third device finishes processing the second packet, thereby implementing time synchronization between playing the first data stream by the second device and playing the second data stream by the third device.

To achieve inter-stream synchronization between different data streams, the first device needs to consider the processing delay of the first packet and the processing delay of the second packet. The processing delay of the first packet may include but is not limited to time required for the second device to perform one or more processes such as decapsulating the first packet, or decoding or rendering the first data stream in the first packet. The processing delay of the second packet includes but is not limited to one or more processes, performed by the third device, such as decapsulating the second packet, or decoding or rendering the first data stream in the second packet.

In a possible implementation, the first device may obtain the processing delay of the first packet and the processing delay of the second packet; and the first device determines a second delay difference based on the processing delay of the first packet and the processing delay of the second packet.

It may be understood that the processing delay of the first packet may include but is not limited to time required for the second device to perform one or more processes such as decapsulating the first packet, or decoding or rendering the first data stream in the first packet. The processing delay of the second packet may include but is not limited to time required for the third device to perform one or more processes such as decapsulating the second packet, or decoding or rendering the second data stream in the second packet.

Further, in a possible implementation, the first device may adjust the actual sending moment of the first packet or the actual sending moment of the second packet based on the second delay difference, to implement inter-stream synchronization between the first data stream and the second data stream. It may be understood that, in this implementation, it is assumed that the transmission delay of the first packet is the same as the transmission delay of the second packet, and it is assumed that the second device starts to process the first packet after receiving the first packet, and the third device starts to process the second packet after receiving the second packet.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the second device receives the any packet, and the sending time of the first packet is time at which the first device sends the any packet to the second device. Correspondingly, the actual sending moment of the first packet is sending time of one or more packets that are in the first packet and that are sent after the any packet. Therefore, "the first device adjusts the actual sending moment of the first packet based on the second delay difference" may be understood as that the first device adjusts, based on the second delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the third device receives the any packet, and the sending time of the any packet is time at which the first device sends the any packet to the third device. Correspondingly, the actual sending moment of the second packet is sending time of one or more packets that are in the second packet and that are sent after the any packet. Therefore, "the first device adjusts the actual sending moment of the second packet based on the second delay difference" may be understood as that the first device adjusts, based on the second delay difference, the sending time of the one or more packets that are in the second packet and that are sent after the any packet.

If the second delay difference is positive, the processing delay of the first packet is greater than the processing delay of the second packet, that is, a moment at which the sink end device (namely, the second device) corresponding to the first packet finishes processing the first packet is later than a moment at which the sink end device (namely, the third device) corresponding to the second packet finishes processing the second packet. Therefore, a start moment at which the second device processes the first packet needs to be earlier than a start moment at which the third device processes the second packet, so that the moment at which the second device finishes processing the first packet is the same as the moment at which the third device finishes processing the second packet. Herein, the first device adjusts the actual sending moment of the first packet to a moment that is the first delay difference earlier than the actual sending moment of the second packet, or the first device adjusts the actual sending moment of the second packet to a moment that is the first delay difference later than the actual sending moment of the first packet, so that the start moment at which the second device processes the first packet is earlier than the start moment at which the third device processes the second packet, and a moment at which the second device finishes processing the first packet is the same as a moment at which the third device finishes processing the second packet, thereby implementing time synchronization between playing the first data stream by the second device and playing the second data stream by the third device. Example 1: If the second delay difference is 30 ms, the first device may adjust the actual sending moment of the first packet to a moment that is 30 ms earlier than the actual sending moment of the second packet, so that the time at which the second device plays the first data stream is synchronized with the time at which the third device plays the second data stream. Example 2: If the second delay difference is 20 ms, the first device may adjust the actual sending moment of the second packet to a time sequence that is 20 ms later than the actual sending moment of the first packet, so that the time at which the second device plays the first data stream is synchronized with the time at which the third device plays the second data stream.

If the second delay difference is negative, the processing delay of the first packet is less than the processing delay of the second packet, that is, a moment at which the sink end device (namely, the second device) corresponding to the first packet finishes processing the first packet is earlier than a moment at which the sink end device (namely, the third device) corresponding to the second packet finishes processing the second packet. Therefore, a start moment at which the second device processes the first packet needs to be later than a start moment at which the third device processes the second packet, so that the moment at which the second device finishes processing the first packet is the same as the moment at which the third device finishes processing the second packet. Herein, the first device adjusts the actual sending moment of the first packet to a moment that is the first delay difference later than the actual sending moment of the second packet, or the first device adjusts the actual sending moment of the second packet to a moment that is the first delay difference earlier than the actual sending moment of the first packet, so that the start moment at which the second device processes the first packet is earlier than the start moment at which the third device processes the second packet, and a moment at which the second device finishes processing the first packet is the same as a moment at which the third device finishes processing the second packet, thereby implementing time synchronization between playing the first data stream by the second device and playing the second data stream by the third device. Example 1: If the second delay difference is -30 ms, the first device may adjust the actual sending moment of the first packet to a moment that is 30 ms later than the actual sending moment of the second packet, so that the time at which the second device plays the first data stream is synchronized with the time at which the third device plays the second data stream. Example 2: If the second delay difference is -20 ms, the first device may adjust the actual sending moment of the second packet to a time sequence that is 20 ms earlier than the actual sending moment of the first packet, so that the time at which the second device plays the first data stream is synchronized with the time at which the third device plays the second data stream.

In another possible implementation, the first device may send fourth information to the second device or the third device, where the fourth information indicates the second delay difference, so that the second device may adjust the processing moment of the first packet based on the second delay difference after receiving the fourth information. Alternatively, after receiving the fourth information, the third device may adjust the processing moment of the second packet based on the second delay difference, so that time at which the second device plays the first data stream is synchronized with time at which the third device plays the second data stream, to implement inter-stream synchronization between the first data stream and the second data stream. It may be understood that, in this implementation, the processing moment of the first packet is the start moment at which the second device processes the first packet. The processing moment of the second packet is the start moment at which the third device processes the second packet.

If the second delay difference is positive, the processing delay of the first packet is greater than the processing delay of the second packet, that is, a moment at which the sink end device (namely, the second device) corresponding to the first packet finishes processing the first packet is later than a moment at which the sink end device (namely, the third device) corresponding to the second packet finishes processing the second packet. Therefore, the second device needs to adjust the processing moment of the first packet to be earlier than the processing moment of the second packet, or the third device needs to adjust the processing moment of the second packet to be later than the processing moment of the first packet, so that the moment at which the second device finishes processing the first packet is the same as the moment at which the third device finishes processing the second packet, thereby implementing time synchronization between playing the first data stream by the second device and playing the second data stream by the third device. Example 1: If the second delay difference is 10 ms, the second device may adjust the processing moment of the first packet to a time sequence that is 10 ms earlier than the processing moment of the second packet, so that the time at which the second device plays the first data stream is synchronized with the time at which the third device plays the second data stream. Example 2: If the first delay difference is 20 ms, the third device may adjust the processing moment of the second packet to a time sequence that is 20 ms later than the processing moment of the second packet, so that the time at which the second device plays the first data stream is synchronized with the time at which the third device plays the second data stream.

If the second delay difference is positive, the processing delay of the first packet is less than the processing delay of the second packet, that is, a moment at which the sink end device (namely, the second device) corresponding to the first packet finishes processing the first packet is earlier than a moment at which the sink end device (namely, the third device) corresponding to the second packet finishes processing the second packet. Therefore, the second device needs to adjust the processing moment of the first packet to be later than the processing moment of the second packet, or the third device needs to adjust the processing moment of the second packet to be earlier than the processing moment of the first packet, so that the moment at which the second device finishes processing the first packet is the same as the moment at which the third device finishes processing the second packet, thereby implementing time synchronization between playing the first data stream by the second device and playing the second data stream by the third device. Example 1: If the second delay difference is -10 ms, the second device may adjust the processing moment of the first packet to a time sequence that is 10 ms later than the processing moment of the second packet, so that the time at which the second device plays the first data stream is synchronized with the time at which the third device plays the second data stream. Example 2: If the first delay difference is -20 ms, the third device may adjust the processing moment of the second packet to a time sequence that is 20 ms earlier than the processing moment of the second packet, so that the time at which the second device plays the first data stream is synchronized with the time at which the third device plays the second data stream.

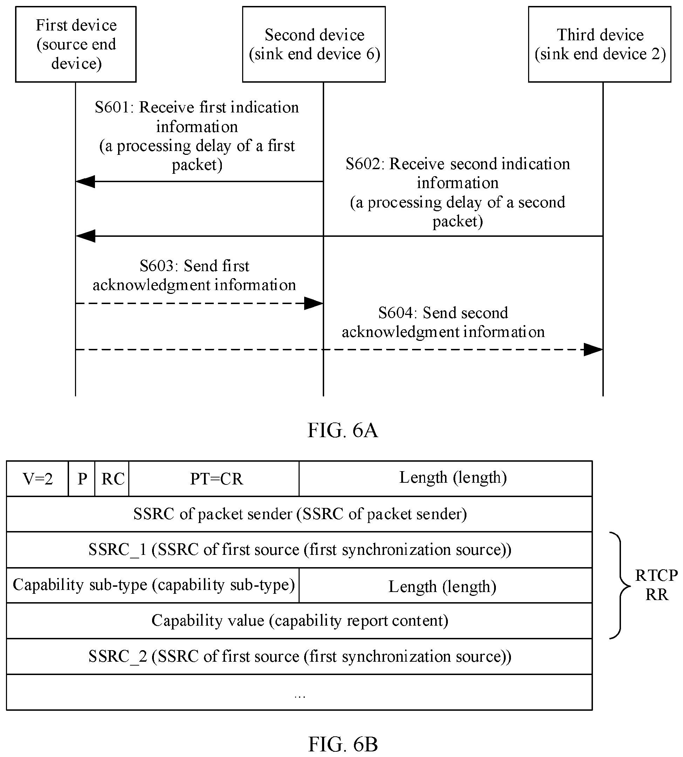

FIG. 6A is a schematic flowchart of obtaining a processing delay of a first packet and a processing delay of a second packet by a first device. The procedure includes the following steps.

S601: The first device receives first indication information from a second device, where the first indication information indicates the processing delay of the first packet. Correspondingly, the second device sends the first indication information.

S602: The first device receives second indication information from a third device, where the second indication information indicates the processing delay of the second packet. Correspondingly, the third device sends the second indication information.

Optionally, the procedure further includes the following steps.

S603: The first device sends first acknowledgment information to the second device, where the first acknowledgment information indicates that the first indication information has been successfully received. Correspondingly, the second device receives the first acknowledgment information.

S604: The first device sends second acknowledgment information to the third device, where the second acknowledgment information indicates that the second indication information has been successfully received. Correspondingly, the third device receives the second acknowledgment information.

In this way, the first device may further send the first acknowledgment information to the second device after receiving the first indication information, where the first acknowledgment information indicates that the first indication information has been successfully received; and the first device may further send the second acknowledgment information to the third device after receiving the second indication information, where the second acknowledgment information indicates that the second indication information has been successfully received. In this way, the second device and the third device can learn a receiving status of the related indication information, so that the second device can send the first indication information again when the first indication information is not successfully received, and the third device can send the second indication information again when the second indication information is not successfully received. This effectively improves communication reliability.

In this embodiment of this application, the first indication information is carried in first signaling, and the second indication information is carried in second signaling. The first signaling and the second signaling may be implemented in a plurality of manners, for example, may be implemented by using any one of an RTCP, a real-time streaming protocol (Real-Time Streaming Protocol, RTSP), or a source service access protocol (Source Service Access Protocol, SSAP). In this way, the first indication information and the first indication information are carried in communication signaling, so that the first device can flexibly obtain the processing delay of the first packet and the processing delay of the second packet.

Implementation 1: The first signaling is carried in a fourth packet, and the second signaling is carried in a fifth packet. The fourth packet and the fifth packet correspond to a second communication protocol. For example, when the second communication protocol is the RTCP, the fourth packet and the fifth packet may be RTCP receiver report (Receiver report, RR) packets, that is, the fourth packet may be an RTCP RR packet sent by the second device to the first device, and the fifth packet may be an RTCP RR packet sent by the third device to the first device.

Correspondingly, the second device sends the fourth packet to the first device, where the fourth packet includes the processing delay of the first packet; and the third device sends the fifth packet to the first device, where the fifth packet includes the processing delay of the second packet.

Optionally, a format of the fourth packet or the fifth packet may be shown in FIG. 6B, and includes the following fields:
Version (Version, V): occupies 2 bits and identifies a version number of the RTCP. A current value is 2.

Padding (Padding, P): occupies 1 bit. If the padding is set, an RTCP packet includes extra padding bytes at the end.

Reception report count (Reception report Count, RC): occupies 5 bits and identifies a quantity of reception report blocks included in the packet (that is, identifies that the packet carries one or more pieces of codec processing capability information). A value of the field is 0, indicating that the codec processing capability information is not carried.

Packet type (Packet Type, PT): occupies 8 bits and identifies that the packet type is a capability report (capability report, CR).

length: occupies 16 bits and identifies a length of the entire packet.

SSRC: occupies 32 bits and identifies identify an identifier ID of a video source or a video sink that generates a capability information report.

SSRC_n: occupies 32 bits and identifies an SSRC identifier of a source to which information in the reception report block belongs.

Capability sub-type (Capability sub-type): occupies 16 bits and identifies a type of capability report content (capability value). For example, SSRC_1 identifies a codec processing delay obtained when the capability value is an audio encoding type, namely, AAC; and SSRC_2 identifies a codec processing delay obtained when the capability value is a video encoding type, namely, H.264. The first signaling or the second signaling may be carried in the field.

Implementation 2: The first signaling and the second signaling are generated based on the RTSP or the SSAP.

Example 1: In this embodiment of this application, in the RTSP, for a case in which a video codec capability (video-codecs-capability) is extended as a definition parameter, and an audio codec capability (audio-codecs-capability) is extended as a definition parameter, encoding/decoding processing capability information of the source end device and the sink end device may be obtained by using request signaling GET_PARAMETER in the RTSP, where the capability information of the sink end device includes an encoding/decoding processing delay and the like.

A data format of the video-codecs-capability parameter is defined as follows:

```
     video-codecs-capability ="video_codecs_capability:" SP sink-video-cap CRLF
     sink-video-cap ="none"/sink-video-list; "none" if no supported at a sink
     sink-video-list =video-format SP latency
     video-format ="H.264"/"H.265"
     latency =decoder latency in units of 5 msecs.
```

A data format of the audio-codecs-capability parameter is defined as follows:

```
     audio-codecs-capability ="audio_codecs_capability:" SP sink-audio-cap CRLF
     sink-audio-cap ="none"/sink-audio-list; "none" if no supported at a sink
     sink-audio-list =audio-format SP latency
     audio-format ="LPCM"/"AAC"/"AC3"
     latency =decoder latency in units of 5 msecs.
```

Correspondingly, when a third communication protocol is the RTSP, the first signaling may be reply signaling of the GET_PARAMETER signaling. In other words, the first device may send the GET_PARAMETER signaling to the second device, and receive the reply signaling of the GET_PARAMETER signaling, where the reply signaling carries the first indication information, so that the first device can obtain the processing delay of the first packet.

Similarly, the first device may send the GET_PARAMETER signaling to the third device, and receive the reply signaling of the GET_PARAMETER signaling, where the reply signaling carries the second indication information. In this way, the first device may obtain the processing delay of the first packet.

Example 2: When the third communication protocol is the SSAP, information exchange may be performed between the source end device (namely, the first device) and the sink end device (namely, the second device and the third device) in the following three manners, so that the source end device obtains the processing delay of the first packet and the processing delay of the second packet.

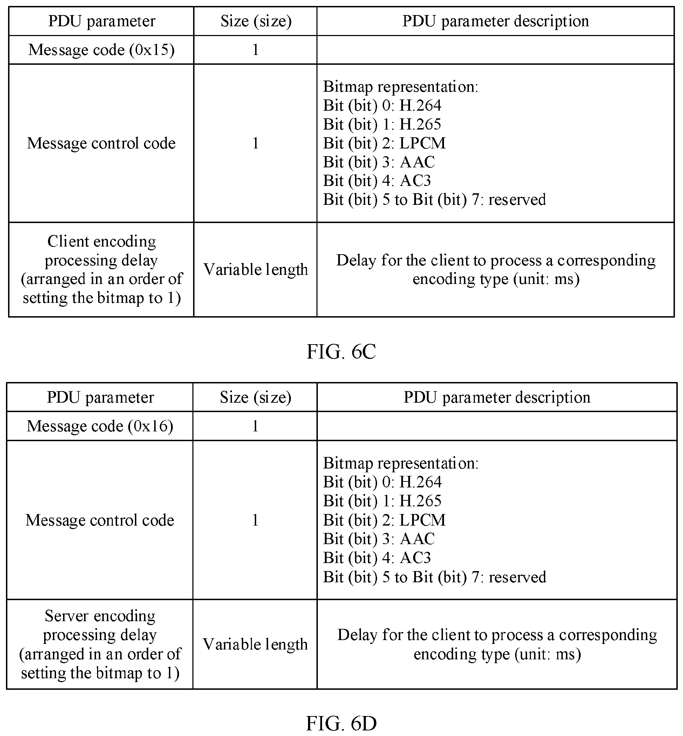

Manner 1: Obtained by using an SSAP PDU request-response message A processing capability request message (codec_cap_REQ) in the SSAP PDU is shown in FIG. 6C, and an information code (message code) corresponding to the processing capability request message is 0x15. A processing capability response message (codec_cap_RSP) in the SSAP PDU is shown in FIG. 6D, and an information code corresponding to the processing capability response message is 0x16.

In Manner 1, the first device sends the processing capability request message to the second device. After receiving the processing capability request message, the second device sends the processing capability response message to the first device. In this way, the first device may know the processing delay of the first packet after receiving the processing capability response message. Similarly, the first device sends the processing capability request message to the third device. After receiving the processing capability request message, the third device sends the processing capability response message to the first device. In this way, the first device may know the processing delay of the second packet after receiving the processing capability response message.

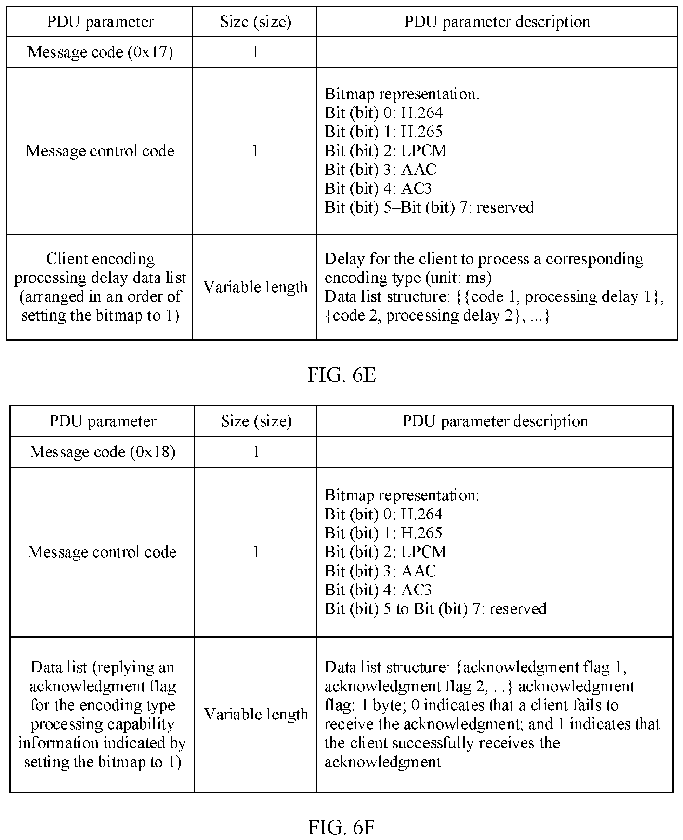

Manner 2: Obtained by using an SSAP PDU indication-acknowledgment message A processing capability indication information (codec_cap_IND) in the SSAP PDU is shown in FIG. 6E, and an information code corresponding to the processing capability indication information is 0x17. A processing capability acknowledgment information (codec_cap_ACK) in the SSAP PDU is shown in FIG. 6F, and an information code corresponding to the processing capability acknowledgment information is 0x18.

In Manner 2, the second device sends the processing capability indication information to the first device, so that the first device may know the processing delay of the first packet after receiving the processing capability indication information. Similarly, the third device sends the processing capability indication information to the first device, so that the first device may know the processing delay of the second packet after receiving the processing capability indication information.

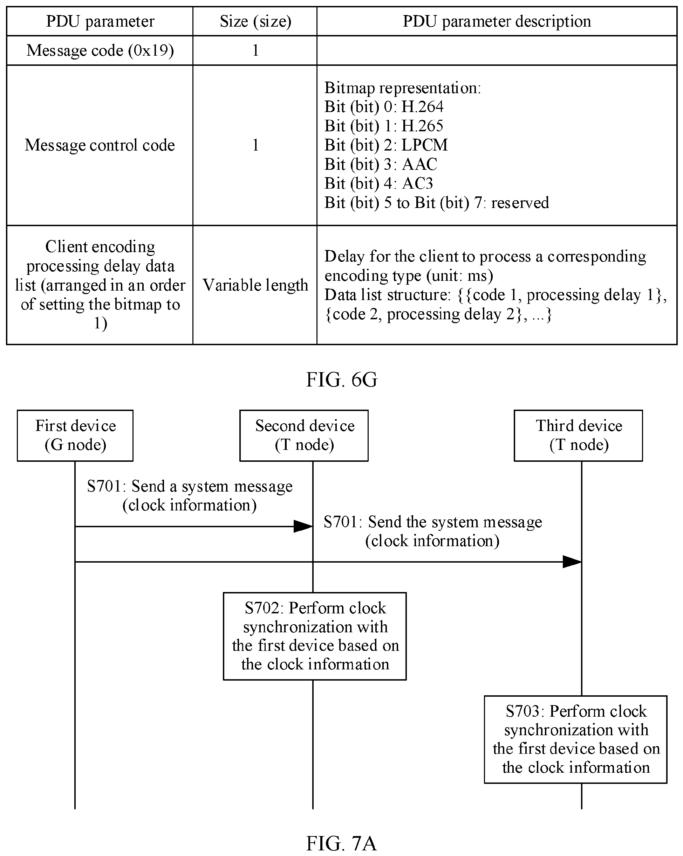

Manner 3: Obtained by using an SSAP PDU notification message A processing capability notification information (codec_cap_NTF PDU) in the SSAP PDU is shown in FIG. 6G, and an information code corresponding to the processing capability notification information is 0x19.

In Manner 3, the second device sends the processing capability notification information, so that the first device may know the processing delay of the first packet after receiving the processing capability notification information. Similarly, the third device sends the processing capability notification information, so that the first device may know the processing delay of the second packet after receiving the processing capability notification information.

In a possible implementation, when the first device performs the preliminary clock synchronization with the second device, the first device may send the GET_PARAMETER signaling to the second device, and receive the reply signaling of the GET_PARAMETER signaling, where the reply signaling carries the first indication information, so that the first device may obtain the processing delay of the first packet. Then, in a process in which the first device and the second device continuously run a related streaming media application, the first device may receive the RTCP RR packet from the second device, where the RTCP RR packet carries the processing delay of the first packet. In this way, the first device may dynamically adjust the processing delay of the first packet, and implement dynamic update, so that subsequently, processing moments and/or actual sending moments of the first packet and the second packet are adjusted more accurately based on the processing delay of the first packet.

In this embodiment of this application, before the first device sends the first packet to the second device, the first device and the second device need to perform clock synchronization, that is, device time information of the second device needs to be synchronized with device time information of the first device. Similarly, before the first device sends the second packet to the third device, the first device and the third device need to perform clock synchronization, that is, device time information of the third device needs to be synchronized with the device time information of the first device.

In a possible implementation, the first device sends a system message, where the system message includes a hyper frame number and clock information that corresponds to a moment at which a start point of a cyclic prefix of a first orthogonal frequency division multiplexing (Orthogonal Frequency Division Multiplexing, OFDM) symbol in a hyper frame corresponding to the hyper frame number passes through an antenna connector; and the clock information is associated with the device time information of the first device. Therefore, the second device and the third device receive the system message, and perform clock synchronization with the first device based on the clock information in the system message. The antenna connector is a connection unit that is in the first device and that connects a radio frequency analog circuit of a transceiver and an antenna.

In another possible implementation, the first device sends data link layer control plane data to the second device and the third device, where the data link layer control plane data includes clock information; and the second device and the third device receive the data link layer control plane data, and perform clock synchronization with the first device based on the clock information.

The clock information is associated with the device time information of the first device. After the second device and the third device perform clock synchronization with the first device, the device time information of the second device is consistent with the device time information of the first device, and the device time information of the third device is consistent with the device time information of the first device.

Example 1: A first device, a second device, and a third device belong to an SLB system, where the first device is used as a G node in the SLB system, and the second device and the third device are used as T nodes in the SLB system.

FIG. 7A is a schematic flowchart of synchronization between a G node and a T node in an SLB system. The procedure includes the following steps.

S701: A first device sends a system message. Correspondingly, a second device receives the system message, and a third device receives the system message.

The system message includes a hyper frame number and clock information that corresponds to a moment at which a start point of a cyclic prefix of a first orthogonal frequency division multiplexing OFDM symbol in a hyper frame corresponding to the hyper frame number passes through an antenna connector.

S702: The second device performs clock synchronization with the first device based on the clock information.

S703: The third device performs clock synchronization with the first device based on the clock information.

The clock information is associated with device time information of the first device, and after the second device performs clock synchronization with the first device, device time information of the second device is consistent with the device time information of the first device; and after the third device performs clock synchronization with the first device, device time information of the third device is consistent with the device time information of the first device.

Example 2: A first device, a second device, and a third device belong to an SLE system, where the first device is used as a G node in the SLE system, and the second device and the third device are used as T nodes in the SLE system.

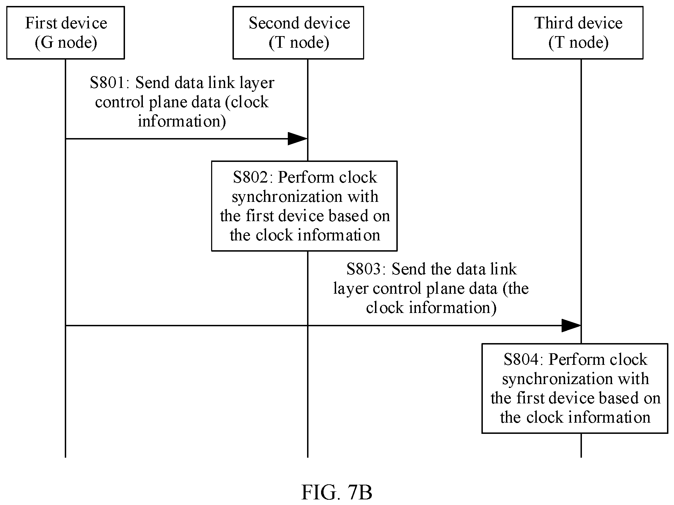

FIG. 7B is a schematic flowchart of synchronization between a G node and a T node in an SLE system. The procedure includes the following steps.

S801: A first device sends data link layer control plane data to a second device. The data link layer control plane data includes clock information. Correspondingly, the second device receives the data link layer control plane data from the first device.

The clock information is used by the second device to perform clock synchronization with the first device, and is used by a third device to perform clock synchronization with the first device.

S802: The second device performs clock synchronization with the first device based on the clock information.

It may be understood that, after the second device performs clock synchronization with the first device, device time information of the second device is consistent with device time information of the first device.

S803: The first device sends the data link layer control plane data to the third device. The data link layer control plane data includes clock information. Correspondingly, the third device receives the data link layer control plane data from the first device.

S804: The third device performs clock synchronization with the first device based on the clock information.

It may be understood that, after the third device performs clock synchronization with the first device, device time information of the third device is consistent with the device time information of the first device.

In this embodiment of this application, it is assumed that a plurality of data streams that need to be synchronously played are collected and encapsulated at a same moment on the source end device.

### Embodiment 2

An embodiment of this application provides another data transmission method, to implement inter-stream synchronization between different data streams of different separated source end devices. The method is applicable to a scenario of inter-stream synchronization between different data streams between a plurality of source end devices and one sink end device. An example in which the source end devices are a second device and a third device, and the sink end device is a first device is used. The method includes: A first device receives a first packet from a second device, where the first packet includes a first data stream and a sampling time sequence of the first data stream; the first device receives a second packet from a third device, where the second packet includes a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device; the first device receives a third packet from the second device, where the third packet includes a first time stamp and a second time stamp, the first time stamp indicates device time information of the second device, the second time stamp indicates a time sequence value corresponding to the system clock of the codec, the device time information of the second device and the time sequence value that corresponds to the system clock of the codec meet a first mapping relationship, and the third packet corresponds to a second communication protocol; the first device receives a fourth packet from the third device, where the fourth packet includes a third time stamp and a fourth time stamp, the third time stamp indicates device time information of the third device, the fourth time stamp indicates a time sequence value corresponding to the system clock of the codec, the device time information of the third device and the time sequence value that corresponds to the system clock of the codec meet a second mapping relationship, and the fourth packet corresponds to the second communication protocol; and the first device maps, based on device time information of the first device, the device time information of the second device, the device time information of the third device, and the time sequence value corresponding to the system clock of the codec, the sampling time sequence of the first data stream and the sampling time sequence of the second data stream to a time axis on which the device time information of the first device is located, or a time axis on which the device time information of the second device is located, or a time axis on which the device time information of the third device is located. In this solution, the sampling time sequence of the first data stream and the sampling time sequence of the second data stream are converted to a same time axis, so that actual sending moments and/or processing moments of the first packet and the second packet are subsequently correspondingly adjusted, to implement inter-stream synchronization between the first data stream in the first packet and the second data stream in the second packet.

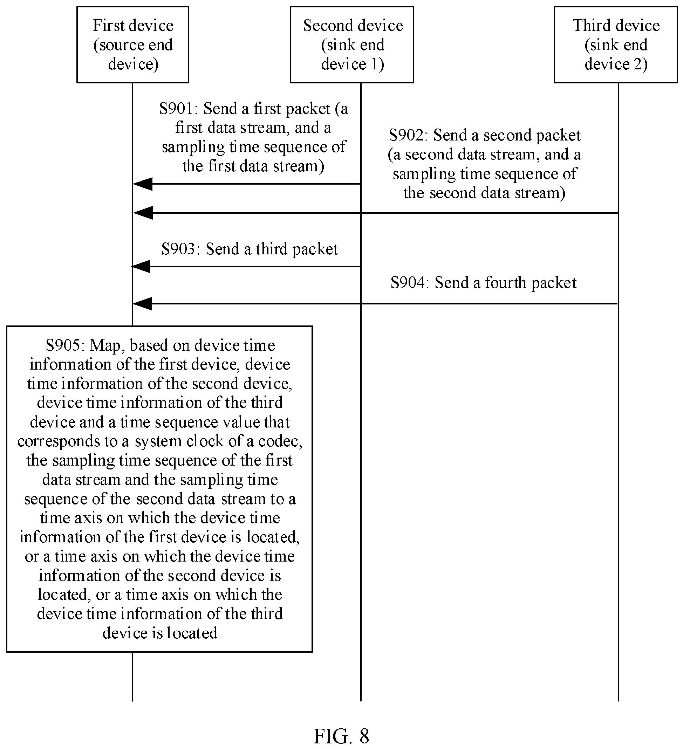

FIG. 8 shows a data transmission method according to an embodiment of this application. The method is applied to the system architecture shown in FIG. 3A. The method includes the following steps.

S901: A first device receives a first packet from a second device, where the first packet includes a first data stream and a sampling time sequence of the first data stream. Correspondingly, the second device sends the first packet.

S902: The first device receives a second packet from a third device, where the second packet includes a second data stream and a sampling time sequence of the second data stream. Correspondingly, the third device sends the second packet.

In this embodiment of this application, the first packet and the second packet correspond to a first communication protocol, and the first communication protocol may be, for example, the RTP. "The first packet and the second packet correspond to the first communication protocol" may be understood as that the first packet and the second packet are encapsulated according to the first communication protocol.

In this embodiment of this application, a time axis on which device time information of the first device is located, a time axis on which device time information of the second device is located, and a time axis on which device time information of the third device is located are mutually synchronized.

In embodiments of this application, the first device may periodically receive the first packet from the second device, and the first device may periodically receive the second packet from the third device.

It can be learned from the foregoing that the first packet represents a plurality of packets or a series of packets that meet a same attribute, and the same attribute of any one of the plurality of packets or the series of packets is as follows: The packet is sent by the second device to the first device, includes the first data stream and the sampling time sequence of the first data stream, and corresponds to the first communication protocol.

The second packet represents a plurality of packets or a series of packets that meet a same attribute, and the same attribute of any one of the plurality of packets or the series of packets is as follows: The packet is sent by the third device to the first device, includes the second data stream and the sampling time sequence of the second data stream, and corresponds to the first communication protocol. The first data stream and the second data stream may be audio streams or video streams. For example, the first data stream and the second data stream are different video streams. For another example, the first data stream is a video stream, and the second data stream is an audio stream.

In this embodiment of this application, the sampling time sequence of the first data stream and the sampling time sequence of the second data stream are time sequences whose values each are in a unit of a system clock of a codec of the first device.

S903: The first device receives a third packet from the second device, where the third packet includes a first time stamp and a second time stamp, the first time stamp indicates the device time information of the second device, and the second time stamp indicates a time sequence value corresponding to the system clock of the codec. Correspondingly, the second device sends the third packet.

**In** this embodiment of this application, the device time information of the second device and the time sequence value that corresponds to the system clock of the codec meet a first mapping relationship.

S904: The first device receives a fourth packet from the third device, where the fourth packet includes a third time stamp and a fourth time stamp, the third time stamp indicates the device time information of the third device, and the fourth time stamp indicates a time sequence value corresponding to the system clock of the codec. Correspondingly, the third device sends the fourth packet.

The device time information of the third device represents air interface time of the third device. The device time information of the third device and the time sequence value that corresponds to the system clock of the codec of the first device meet a second mapping relationship.

**In** this embodiment of this application, the third packet and the fourth packet correspond to the second communication protocol, and the second communication protocol may be, for example, the RTCP. **In** other words, the third packet and the fourth packet are encapsulated according to the second communication protocol.

**In** addition, in embodiments of this application, the first device may periodically receive the third packet from the second device, and the first device may periodically receive the fourth packet from the third device.

It can be learned from the foregoing that the third packet represents a plurality of packets or a series of packets that meet a same attribute, and the same attribute of any one of the plurality of packets or the series of packets is as follows: The packet is sent by the second device to the first device, includes a first time stamp and a second time stamp, where the first time stamp indicates the device time information of the second device, and the second time stamp indicates the time sequence value corresponding to the system clock of the codec, and corresponds to the second communication protocol.

The fourth packet represents a plurality of packets or a series of packets that meet a same attribute, and the same attribute of any one of the plurality of packets or the series of packets is as follows: The packet is sent by the third device to the first device, includes a third time stamp and a fourth time stamp, where the third time stamp indicates the device time information of the third device, and the fourth time stamp indicates the time sequence value corresponding to the system clock of the codec, and corresponds to the second communication protocol.

S905: The first device maps, based on the device time information of the first device, the device time information of the second device, the device time information of the third device, and the time sequence value corresponding to the system clock of the codec, the sampling time sequence of the first data stream and the sampling time sequence of the second data stream to the time axis on which the device time information of the first device is located, or the time axis on which the device time information of the second device is located, or the time axis on which the device time information of the third device is located.

The time axis on which the device time information of the first device is located, the time axis on which the device time information of the second device is located, and the time axis on which the device time information of the third device is located are mutually synchronized.

In the embodiment shown in FIG. 8, the sampling time sequence of the first data stream and the sampling time sequence of the second data stream are converted to a same time axis, so that actual sending moments and/or processing moments of the first packet and the second packet are subsequently correspondingly adjusted, to implement inter-stream synchronization between the first data stream in the first packet and the second data stream in the second packet.

It should be understood that, before the first device, the second device, and the third device exchange information, the second device and the third device need to perform clock synchronization with the first device.

In a possible implementation, the first device sends a system message, where the system message includes a hyper frame number and clock information that corresponds to a moment at which a start point of a cyclic prefix of a first OFDM symbol in a hyper frame corresponding to the hyper frame number passes through an antenna connector, and the clock information is correlated with the device time information of the first device. The second device receives the system message, and performs clock synchronization with the first device based on the clock information in the system message, for the device time information of the second device to be consistent with the device time information of the first device. Similarly, the third device receives the system message, and performs clock synchronization with the first device based on the clock information in the system message, for the device time information of the third device to be consistent with the device time information of the first device. Optionally, when the first device, the second device, and the third device form an SLB system, the first device sends the system message.

In another possible implementation, the first device sends data link layer control plane data to the second device and the third device, where the data link layer control plane data includes clock information, and the clock information is associated with the device time information of the first device; the second device receives the data link layer control plane data, and performs clock synchronization with the first device based on that the data link layer control plane data includes the clock information; and the third device receives the data link layer control plane data, and performs clock synchronization with the first device based on that the data link layer control plane data includes the clock information. Optionally, when the first device, the second device, and the third device form an SLE system, the first device sends the data link layer control plane data to the second device and the third device.

The device time information of the first device represents air interface time of the first device. For example, the device time information of the first device may be a clock that is based on a 48 kHz sampling sequence value and that is exported through air interface synchronization of the first device.

It may be understood that, after the second device performs clock synchronization with the first device, the device time information of the second device is consistent with the device time information of the first device. After the third device performs clock synchronization with the first device, the device time information of the third device is consistent with the device time information of the first device.

In a possible implementation, the first device determines a transmission delay of the first packet based on a first moment and a second moment, where the sampling time sequence of the first data stream and the first moment meet the first mapping relationship, and receiving time of the first packet and the second moment meet the first mapping relationship; the first device determines a transmission delay of the second packet based on a third moment and a fourth moment, where the sampling time sequence of the second data stream and the third moment meet the second mapping relationship, and receiving time of the second packet and the fourth moment meet the second mapping relationship; and the first device determines a first delay difference between the transmission delay of the first packet and the transmission delay of the second packet based on the transmission delay of the first packet and the transmission delay of the second packet. Further, the first device adjusts a processing moment of the first packet or a processing moment of the second packet based on the first delay difference; or the first device sends first information to the second device, where the first information indicates the first delay difference; and correspondingly, the second device receives the first information, and adjusts an actual sending moment of the first packet based on the first delay difference; or the first device sends first information to the second device, where the first information indicates the first delay difference; and correspondingly, the third device receives the first information, and adjusts the actual sending moment of the second packet based on the first delay difference.

It may be understood that the processing moment of the first packet is a start moment at which the first device processes the first packet. The processing moment of the second packet is a start moment at which the first device processes the second packet.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the first device receives the any packet, and the sending time of the first packet is time at which the second device sends the any packet to the first device. Correspondingly, the actual sending moment of the first packet is sending time of one or more packets that are in the first packet and that are sent after the any packet. Therefore, "the second device adjusts the actual sending moment of the first packet based on the first delay difference" may be understood as that the second device adjusts, based on the first delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the first device receives the any packet, and the sending time of the any packet is time at which the third device sends the any packet to the first device. Correspondingly, the actual sending moment of the second packet is sending time of one or more packets that are in the second packet and that are sent after the any packet. Therefore, " the third device adjusts the actual sending moment of the first packet based on the first delay difference" may be understood as the third device adjusts, based on the first delay difference, the sending time of the one or more packets that are in the second packet and that are sent after the any packet.

In this way, after the first packet and the second packet are processed by the first device (the sink end device), the play time of the first data stream in the first packet is synchronized with the play time of the second data stream in the second packet.

In a possible implementation, the first device determines a second delay difference based on the processing delay of the first packet and the processing delay of the second packet. Further, the first device (the sink end device) may determine the second delay difference based on the processing delay of the first packet and the processing delay of the second packet; and the first device adjusts the processing moment of the first packet or the processing moment of the second packet based on the second delay difference; or the first device sends fourth information to the second device, where the fourth information indicates the second delay difference, so that the second device adjusts the actual sending moment of the first packet; or the first device sends fourth information to the third device, where the fourth information indicates the second delay difference, so that the third device adjusts the actual sending moment of the second packet.

It may be understood that, the processing delay of the first packet includes but is not limited to time required for the first device to perform one or more processes such as decapsulating the first packet, or decoding or rendering the first data stream in the first packet. The processing moment of the first packet includes but is not limited to a start moment at which the first device processes the first packet. The processing delay of the second packet is time required for the first device to perform one or more processes such as decapsulating the second packet, decoding or rendering the second data stream in the second packet, or the like. The processing moment of the second packet is a start moment at which the first device processes the second packet. In this way, after the first packet and the second packet are processed by the first device (the sink end device), the play time of the first data stream in the first packet is synchronized with the play time of the second data stream in the second packet.

It can be learned from the foregoing description that the first packet represents a plurality of packets or a series of packets that meet a same attribute. Correspondingly, the transmission delay of the first packet may be a difference between receiving time of any packet in the first packet and sending time of the any packet. The receiving time of the any packet is time at which the second device receives the any packet, and the sending time of the first packet is time at which the first device sends the any packet to the second device. Correspondingly, the actual sending moment of the first packet is sending time of one or more packets that are in the first packet and that are sent after the any packet. Therefore, "the second device adjusts the actual sending moment of the first packet based on the second delay difference" may be understood as that the second device adjusts, based on the second delay difference, the sending time of the one or more packets that are in the first packet and that are sent after the any packet.

Similarly, it can be learned from the foregoing description that the second packet also represents a plurality of packets or a series of packets that meet a same attribute. Correspondingly, the transmission delay of the second packet may be a difference between receiving time of any packet in the second packet and sending time of the any packet. The receiving time of the any packet is time at which the third device receives the any packet, and the sending time of the any packet is time at which the first device sends the any packet to the third device. Correspondingly, the actual sending moment of the second packet is sending time of one or more packets that are in the second packet and that are sent after the any packet. Therefore, "the third device adjusts the actual sending moment of the second packet based on the second delay difference" may be understood as that the third device adjusts, based on the second delay difference, the sending time of the one or more packets that are in the second packet and that are sent after the any packet.

It may be understood that before the second device sends the third packet to the first device, the second device needs to obtain the device time information of the second device. In a possible implementation, that the second device obtains the device time information of the second device includes: The second device obtains the device time information of the second device by using an inter-layer primitive of a protocol stack.

In a possible implementation, the protocol stack includes a first protocol layer, a second protocol layer, and a third protocol layer.

Correspondingly, that the second device obtains the device time information of the second device by using an inter-layer primitive of a protocol stack includes: The first protocol layer sends a first inter-layer primitive to the second protocol layer, where the first inter-layer primitive is used by the first protocol layer to request the second protocol layer to query the device time information of the second device; the second protocol layer sends a second inter-layer primitive to the third protocol layer, where the second inter-layer primitive is used by the second protocol layer to request the third protocol layer to query the device time information of the second device; the second protocol layer receives a third inter-layer primitive from the third protocol layer, where the third inter-layer primitive is used by the third protocol layer to indicate the device time information of the second device to the second protocol layer; and the first protocol layer receives a fourth inter-layer primitive from the second protocol layer, where the fourth inter-layer primitive is used by the second protocol layer to indicate the device time information of the second device to the first protocol layer.

It may be understood that before the third device sends the fourth packet to the first device, the third device needs to obtain the device time information of the third device. In a possible implementation, that the third device obtains the device time information of the third device includes: The third device obtains the device time information of the third device by using an inter-layer primitive of a protocol stack. A specific implementation is similar to an implementation in which the second device obtains the device time information of the second device, and details are not described herein again.

The foregoing describes in detail the communication methods provided in embodiments of this application. The following describes in detail apparatuses provided in embodiments of this application with reference to specific accompanying drawings. It should be understood that descriptions of the apparatus embodiments correspond to the descriptions of the method embodiments. Therefore, for content that is not described in detail, refer to each other.

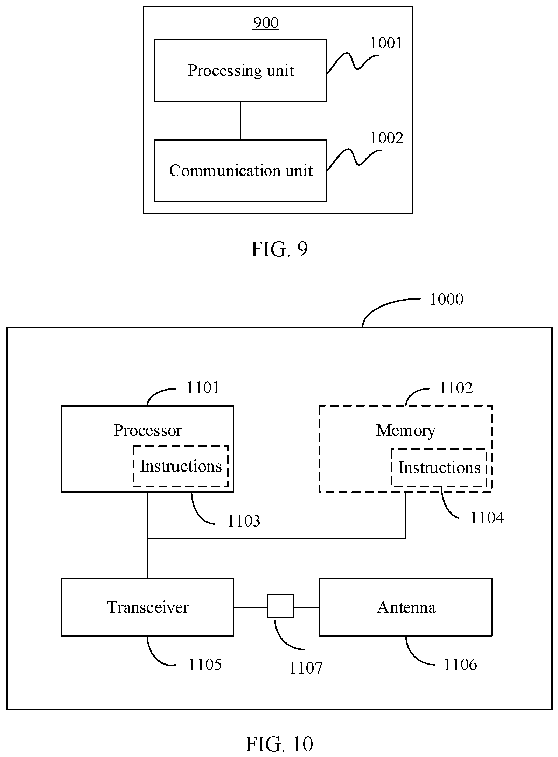

FIG. 9 is a block diagram of an apparatus 900 according to an embodiment of this application. The apparatus is configured to implement functions of the first node or the second node in the method embodiments. For example, the apparatus may be a software module or a chip system. The chip may include a chip, or may include a chip and another discrete device. The apparatus 900 includes a processing unit 1001 and a communication unit 1002. The communication unit 1002 is configured to communicate with another device, and may also be referred to as a communication interface, a transceiver unit, an input/output interface, or the like.

In Case 1, when the apparatus 900 is configured to implement the functions of the first device in the method embodiment 1, the apparatus 900 may be the first device, or a chip, a circuit, or the like configured in the first device. The processing unit 1001 is configured to perform processing-related operations of the first device in the method embodiment 1, and the communication unit 1002 is configured to perform sending/receiving-related operations of the first device in the method embodiment 1.

When the apparatus 900 is configured to implement the functions of the first device in the foregoing the method embodiment 1, the communication unit 1002 may be configured to: send a first packet to a second device, where the first packet includes a first data stream and a sampling time sequence of the first data stream; and send a second packet to a third device, where the second packet includes a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device. The communication unit 1002 may be further configured to send third packets to the second device and the third device, where the third packet includes a first time stamp and a second time stamp, the first time stamp indicates device time information of the first device, the second time stamp indicates a time sequence value corresponding to the system clock of the codec, and the third packet corresponds to a second communication protocol.

In a possible implementation, the device time information of the first device represents air interface time of the first device. In this way, a reference time axis of the first packet and the second packet is a time axis of the air interface time of the first device.

In a possible implementation, the communication unit 1002 may be further configured to send a system message, where the system message includes a hyper frame number and clock information that corresponds to a moment at which a start point of a cyclic prefix of a first orthogonal frequency division multiplexing OFDM symbol in a hyper frame corresponding to the hyper frame number passes through an antenna connector; or the communication unit 1002 may be further configured to send data link layer control plane data to the second device and the third device, where the data link layer control plane data includes clock information. The clock information is associated with the device time information, and the clock information is used by the second device and the third device to perform clock synchronization with the first device. The antenna connector is a connection unit that is in the first device and that connects a radio frequency analog circuit of a transceiver and an antenna.

In a possible implementation, the communication unit 1002 may be further configured to obtain device time information of the communication unit 1002 before sending the third packets to the second device and the third device.

In a possible implementation, the first device obtains the device time information of the first device by using an inter-layer primitive of a protocol stack.

In a possible implementation, the protocol stack includes a first protocol layer, a second protocol layer, and a third protocol layer; and correspondingly, that the first device obtains the device time information by using an inter-layer primitive of a protocol stack includes: The first protocol layer sends a first inter-layer primitive to the second protocol layer, where the first inter-layer primitive is used by the first protocol layer to request the second protocol layer to query the device time information; the second protocol layer sends a second inter-layer primitive to the third protocol layer, where the second inter-layer primitive is used by the second protocol layer to request the third protocol layer to query the device time information; the second protocol layer receives a third inter-layer primitive from the third protocol layer, where the third inter-layer primitive is used by the third protocol layer to indicate the device time information to the second protocol layer; and the first protocol layer receives a fourth inter-layer primitive from the second protocol layer, where the fourth inter-layer primitive is used by the second protocol layer to indicate the device time information to the first protocol layer.

In a possible implementation, the communication unit 1002 may be further configured to: receive first information from the second device, and receive second information from the third device, where the first information indicates a transmission delay of the first packet, and the second information indicates a transmission delay of the second packet. The processing unit 1001 may be further configured to: determine a first delay difference between the transmission delay of the first packet and the transmission delay of the second packet based on the transmission delay of the first packet and the transmission delay of the second packet; and adjust an actual sending moment of the first packet or an actual sending moment of the second packet based on the first delay difference. The communication unit 1002 may be further configured to send third information to the second device or the third device, where the third information indicates the first delay difference.

In a possible implementation, the processing unit 1001 may be further configured to: obtain a processing delay of the first packet and a processing delay of the second packet; determine a second delay difference based on the processing delay of the first packet and the processing delay of the second packet; and adjust the actual sending moment of the first packet or the actual sending moment of the second packet based on the second delay difference; or the communication unit 1002 may be further configured to send fourth information to the second device or the third device, where the fourth information indicates the second delay difference.

In a possible implementation, the communication unit 1002 receives first indication information from the second device, where the first indication information indicates the processing delay of the first packet; and the communication unit 1002 receives second indication information from the third device, where the second indication information indicates the processing delay of the second packet.

In a possible implementation, the first indication information is carried in first signaling, and the second indication information is carried in second signaling.

In a possible implementation, the communication unit 1002 sends first acknowledgment information to the second device after receiving the first indication information, where the first acknowledgment information indicates that the first indication information has been successfully received; and the communication unit 1002 sends second acknowledgment information to the third device after receiving the second indication information, where the second acknowledgment information indicates that the second indication information has been successfully received.

In Case 2, when the apparatus 900 is configured to implement the functions of the second device in the method embodiment 1, the apparatus 900 may be the second device, or a chip, a circuit, or the like configured in the second device. The processing unit 1001 is configured to perform processing-related operations of the second device in the method embodiment 1, and the communication unit 1002 is configured to perform sending/receiving-related operations of the second device in the method embodiment 1.

In a possible implementation, the communication unit 1002 is configured to receive a first packet from a first device, where the first packet includes a first data stream and a sampling time sequence of the first data stream, the first packet corresponds to a first communication protocol, and the sampling time sequence of the first data stream is a time sequence whose value is in a unit of a system clock of a codec of the first device. The communication unit 1002 is further configured to receive a third packet from the first device, where the third packet includes a first time stamp and a second time stamp, the first time stamp indicates device time information of the first device, the second time stamp indicates a time sequence value corresponding to the system clock of the codec of the first device, and the third packet corresponds to a second communication protocol. The processing unit 1001 is configured to map, based on the device time information and the time sequence value that corresponds to the system clock of the codec, the sampling time sequence of the first data stream to a first moment on a time axis on which the device time information of the first device is located, where the device time information of the first device and the time sequence value that corresponds to the system clock of the codec meet a first mapping relationship.

In Case 3, when the apparatus 900 is configured to implement the functions of the third device in the method embodiment 1, the apparatus 900 may be the third device, or a chip, a circuit, or the like configured in the third device. The processing unit 1001 is configured to perform processing-related operations of the third device in the method embodiment 1, and the communication unit 1002 is configured to perform sending/receiving-related operations of the third device in the method embodiment 1.

In a possible implementation, the communication unit 1002 is configured to receive a second packet from a first device, where the first packet includes a second data stream and a sampling time sequence of the second data stream, the second packet corresponds to a first communication protocol, and the sampling time sequence of the second data stream is a time sequence whose value is in a unit of a system clock of a codec of the first device. The communication unit 1002 is further configured to receive a third packet from the first device, where the third packet includes a first time stamp and a second time stamp, the first time stamp indicates device time information of the first device, the second time stamp indicates a time sequence value corresponding to a system clock of a codec of the first device, and the third packet corresponds to a second communication protocol. The processing unit 1001 is configured to map, based on the device time information and the time sequence value that corresponds to the system clock of the codec, the sampling time sequence of the second data stream to a first moment on a time axis on which the device time information of the first device is located, where the device time information of the first device and the time sequence value that corresponds to the system clock of the codec meet a first mapping relationship.

In Case 4, when the apparatus 900 is configured to implement the functions of the first device in the method embodiment 1, the apparatus 900 may be the first device, or a chip, a circuit, or the like configured in the first device. The processing unit 1001 is configured to perform processing-related operations of the first device in the method embodiment 1, and the communication unit 1002 is configured to perform sending/receiving-related operations of the first device in the method embodiment 1.

In a possible implementation, the communication unit 1002 is configured to receive a first packet from a second device, where the first packet includes a first data stream and a sampling time sequence of the first data stream. The communication unit 1002 is further configured to receive a second packet from a third device, where the second packet includes a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device. The communication unit 1002 is further configured to receive a third packet from the second device, where the third packet includes a first time stamp and a second time stamp, the first time stamp indicates device time information of the second device, the second time stamp indicates a time sequence value corresponding to the system clock of the codec, the device time information of the second device and the time sequence value that corresponds to the system clock of the codec meet a first mapping relationship, and the third packet corresponds to a second communication protocol. The communication unit 1002 is further configured to receive a fourth packet from the third device, where the fourth packet includes a third time stamp and a fourth time stamp, the third time stamp indicates device time information of the third device, the fourth time stamp indicates a time sequence value corresponding to the system clock of the codec, the device time information of the third device and the time sequence value that corresponds to the system clock of the codec meet a second mapping relationship, and the fourth packet corresponds to the second communication protocol. The first device maps, based on device time information of the first device, the device time information of the second device, the device time information of the third device, and the time sequence value corresponding to the system clock of the codec, the sampling time sequence of the first data stream and the sampling time sequence of the second data stream to a time axis on which the device time information of the first device is located, or a time axis on which the device time information of the second device is located, or a time axis on which the device time information of the third device is located.

In case 5, when the apparatus 900 is configured to implement the functions of the second device in the foregoing method embodiment 2, the apparatus 900 may be the second device, or a chip, a circuit, or the like configured in the second device. The processing unit 1001 is configured to perform processing-related operations of the second device in the method embodiment 2, and the communication unit 1002 is further configured to perform sending/receiving-related operations of the second device in the method embodiment 2.

In a possible implementation, the communication unit 1002 is configured to send a first packet to a first device, where the first packet includes a first data stream and a sampling time sequence of the first data stream, and the first packet corresponds to a first communication protocol. The communication unit 1002 is further configured to send a third packet to the first device, where the third packet includes device time information of the second device and a time sequence value that corresponds to a system clock of a codec of the first device, and the third packet corresponds to the second communication protocol.

In case 6, when the apparatus 900 is configured to implement the functions of the third device in the foregoing method embodiment 2, the apparatus 900 may be the third device, or a chip, a circuit, or the like configured in the third device. The processing unit 1001 is configured to perform processing-related operations of the third device in the method embodiment 2, and the communication unit 1002 is configured to perform sending/receiving-related operations of the third device in the method embodiment 2.

In a possible implementation, the communication unit 1002 is configured to send a second packet to a first device, where the second packet includes a second data stream and a sampling time sequence of the second data stream, and the second packet corresponds to a first communication protocol. The communication unit 1002 is further configured to send a fourth packet to the first device, where the fourth packet includes device time information of the third device and a time sequence value that corresponds to a system clock of a codec of the first device, and the fourth packet corresponds to the second communication protocol.

In this embodiment of this application, division into the units is an example, and is only a logical function division. In actual implementation, another division manner may be used. In addition, functional units in this embodiment of this application may be integrated into one processor, or each of the units may exist alone physically, or two or more units are integrated into one unit. The integrated unit may be implemented in a form of hardware, or may be implemented in a form of a software functional unit.

As shown in FIG. 10, an embodiment of this application further provides a diagram of a structure of a communication apparatus 1000. The communication apparatus 1000 may be configured to implement the methods described in the foregoing method embodiments. For details, refer to the descriptions in the foregoing method embodiments. For example, the communication apparatus 1000 can perform the steps performed by the first device, the second device, or the third device in the foregoing method embodiments.

The communication apparatus 1000 includes one or more processors 1101. The processor 1101 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The communication apparatus 1000 includes one or more processors 1101, and the one or more processors 1101 can implement the method in the foregoing embodiment. Optionally, the processor 1101 may further implement another function in addition to the method shown in the foregoing embodiment.

In this embodiment of this application, the apparatus 1000 may further include a transceiver 1105, an antenna 1106, and an antenna connector 1107. The processor 1101 may be referred to as a processing unit, and is configured to control the apparatus (a terminal or a base station). The transceiver 1105 may be referred to as a transceiver, a transceiver circuit, a transceiver unit, or the like, and is configured to implement a receiving and sending function of the apparatus through the antenna 1106. In the first device, a connection unit connecting the radio frequency analog circuit in the transceiver 1105 and the antenna 1106 is an antenna connector 1107. Correspondingly, the system message sent by the first device includes a hyper frame number and clock information that corresponds to a moment at which a start point of a cyclic prefix of a first OFDM symbol in a hyper frame corresponding to the hyper frame number passes through the antenna connector 1107.

In a design, the processor 1101 may execute instructions, so that the apparatus 1000 performs the methods described in the foregoing method embodiments. All or some of the instructions may be stored in the processor 1101. For example, all or some of instructions 1103 may be stored in the processor 1101, or the instructions 1103 are stored in the processor 1101, and instructions 1104 are stored in a memory 1102 coupled to the processor. The processor 1101 may synchronously execute the instructions 1103 and the instructions 1104, so that the communication apparatus 1000 performs the method described in the foregoing method embodiment. The instructions 1103 and the instructions 1104 are also referred to as computer programs.

In another possible design, the communication apparatus 1000 may further include a circuit, and the circuit may implement the function in the foregoing method embodiment.

In still another possible design, the communication apparatus 1000 may include one or more memories 1102 storing the instructions 1104. The instructions may be run on the processor 1101, so that the apparatus 1000 performs the method described in the foregoing method embodiment. Optionally, the memory 1102 may further store data. Optionally, the processor 1101 may also store instructions and/or data. For example, the one or more memories 1102 may store the correspondence described in the foregoing embodiment, or the related parameter, table, or the like in the foregoing embodiment. The processor and the memory may be separately disposed, or may be integrated.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware assembly. The processor may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be in a storage medium, and the storage medium is located in a memory.

The memory may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synchronous link DRAM, SLDRAM), and a direct rambus random access memory (Direct Rambus RAM, DR RAM). It should be noted that the memory of the systems and methods described in this specification includes but is not limited to these memories and any memory of another appropriate type. The memory may independently exist and may be connected to the processor through a communication line. The memory may alternatively be integrated with the processor.

An embodiment of this application further provides a terminal. The terminal may be an intelligent cockpit device, a smart home device, an intelligent manufacturing device, a vehicle, or the like. It may alternatively be understood that the "vehicle-mounted wireless short-range communication system" technology is applied to a short-range communication system in the non-vehicle-mounted field. The first device, the second device, and the third device each may be one or more of modules such as a camera, a screen, a microphone, an acoustic device, radar, an electronic key, a passive entry passive start system controller, and user equipment UE. Optionally, the terminal may be an unmanned aerial vehicle, a robot, a device in a smart home scenario, a device in an intelligent manufacturing scenario, or the like.

Further, an embodiment of this application further provides an apparatus, including units configured to implement the foregoing embodiments. Alternatively, the apparatus includes a processor and an interface circuit. The processor is configured to communicate with another apparatus through the interface circuit, and perform the methods in the foregoing method embodiments. Alternatively, the apparatus includes a processor, configured to invoke a program stored in a memory, to perform the methods described in the foregoing embodiments.

An embodiment of this application further provides a computer-readable storage medium, including readable instructions. When the readable instructions are run on a computer, the computer is enabled to perform the methods described in the foregoing embodiment.

An embodiment of this application further provides a chip system. The chip system includes at least one processor and interface circuit. Further, optionally, the chip system may further include a memory or an external memory. The processor is configured to execute instructions and/or data interaction through the interface circuit, to implement the method in the foregoing method embodiment. The chip system may include a chip, or may include a chip and another discrete device.

An embodiment of this application further provides a computer program product, including instructions. When the instructions are run on a computer, the computer is enabled to perform the methods described in the foregoing embodiment.

In embodiments of this application, the processor may be a general-purpose processor, a digital signal processor, an application-specific integrated circuit, a field programmable gate array or another programmable logic device, a discrete gate or transistor logic device, a discrete hardware assembly, or a synergistic processing unit, and may implement or perform the methods, steps, and logical block diagrams disclosed in embodiments of this application. The general-purpose processor may be a microprocessor, any conventional processor, or the like. The steps in the methods disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk storage, a CD-ROM, and an optical storage) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

The computer program instructions may be stored in a computer-readable storage that can instruct the computer or any other programmable data processing device to work in a specific manner, so that the instructions stored in the computer-readable storage generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data transmission method, comprising:
sending, by a first device, a first packet to a second device, wherein the first packet comprises a first data stream and a sampling time sequence of the first data stream;
sending, by the first device, a second packet to a third device, wherein the second packet comprises a second data stream and a sampling time sequence of the second data stream, wherein
the first packet and the second packet correspond to a first communication protocol, and the sampling time sequence of the first data stream and the sampling time sequence of the second data stream are time sequences whose values each are in a unit of a system clock of a codec of the first device; and
sending, by the first device, third packets to the second device and the third device, wherein the third packet comprises a first time stamp and a second time stamp, the first time stamp indicates device time information of the first device, the second time stamp indicates a time sequence value corresponding to the system clock of the codec, and the third packet corresponds to a second communication protocol.

2. The method according to claim 1, wherein the device time information represents air interface time of the first device.

3. The method according to claim 1 or 2, wherein the method further comprises:
sending, by the first device, a system message, wherein the system message comprises a hyper frame number and clock information that corresponds to a moment at which a start point of a cyclic prefix of a first orthogonal frequency division multiplexing OFDM symbol in a hyper frame corresponding to the hyper frame number passes through an antenna connector; or
sending, by the first device, data link layer control plane data to the second device and the third device, wherein the data link layer control plane data comprises clock information, wherein
the clock information is associated with the device time information, and the clock information is used by the second device and the third device to perform clock synchronization with the first device.

4. The method according to any one of claims 1 to 3, wherein the method further comprises:
obtaining, by the first device, the device time information before sending the third packets to the second device and the third device.

5. The method according to claim 4, wherein
the obtaining, by the first device, the device time information comprises:
obtaining, by the first device, the device time information by using an inter-layer primitive of a protocol stack.

6. The method according to claim 5, wherein the protocol stack comprises a first protocol layer, a second protocol layer, and a third protocol layer; and
the obtaining, by the first device, the device time information by using an inter-layer primitive of the protocol stack comprises:
sending, by the first protocol layer, a first inter-layer primitive to the second protocol layer, wherein the first inter-layer primitive is used by the first protocol layer to request the second protocol layer to query the device time information;
sending, by the second protocol layer, a second inter-layer primitive to the third protocol layer, wherein the second inter-layer primitive is used by the second protocol layer to request the third protocol layer to query the device time information;
receiving, by the second protocol layer, a third inter-layer primitive from the third protocol layer, wherein the third inter-layer primitive is used by the third protocol layer to indicate the device time information to the second protocol layer; and
receiving, by the first protocol layer, a fourth inter-layer primitive from the second protocol layer, wherein the fourth inter-layer primitive is used by the second protocol layer to indicate the device time information to the first protocol layer.

7. The method according to any one of claims 1 to 6, wherein the method further comprises:
receiving, by the first device, first information from the second device, and receiving second information from the third device, wherein the first information indicates a transmission delay of the first packet, and the second information indicates a transmission delay of the second packet;
determining, by the first device, a first delay difference between the transmission delay of the first packet and the transmission delay of the second packet based on the transmission delay of the first packet and the transmission delay of the second packet; and
adjusting, by the first device, an actual sending moment of the first packet or an actual sending moment of the second packet based on the first delay difference; or sending, by the first device, third information to the second device or the third device, wherein the third information indicates the first delay difference.

8. The method according to any one of claims 1 to 7, wherein the method further comprises:
obtaining, by the first device, a processing delay of the first packet and a processing delay of the second packet;
determining, by the first device, a second delay difference based on the processing delay of the first packet and the processing delay of the second packet; and
adjusting, by the first device, the actual sending moment of the first packet or the actual sending moment of the second packet based on the second delay difference; or
sending, by the first device, fourth information to the second device or the third device, wherein the fourth information indicates the second delay difference.

9. The method according to claim 8, wherein the obtaining, by the first device, a processing delay of the first packet and a processing delay of the second packet comprises:
receiving, by the first device, first indication information from the second device, wherein the first indication information indicates the processing delay of the first packet; and
receiving, by the first device, second indication information from the third device, wherein the second indication information indicates the processing delay of the second packet.

10. The method according to claim 9, wherein the first indication information is carried in first signaling, and the second indication information is carried in second signaling.

11. The method according to claim 9 or 10, wherein the method further comprises:
sending, by the first device, first acknowledgment information to the second device after receiving the first indication information, wherein the first acknowledgment information indicates that the first indication information has been successfully received; and
sending, by the first device, second acknowledgment information to the third device after receiving the second indication information, wherein the second acknowledgment information indicates that the second indication information has been successfully received.

12. A data transmission method, comprising:
receiving, by a second device, a first packet from a first device, wherein the first packet comprises a first data stream and a sampling time sequence of the first data stream, the first packet corresponds to a first communication protocol, and the sampling time sequence of the first data stream is a time sequence whose value is in a unit of a system clock of a codec of the first device;
receiving, by the second device, a third packet from the first device, wherein the third packet comprises a first time stamp and a second time stamp, the first time stamp indicates device time information of the first device, the second time stamp indicates a time sequence value corresponding to the system clock of the codec, and the third packet corresponds to a second communication protocol; and
mapping, by the second device based on the device time information and the time sequence value that corresponds to the system clock of the codec, the sampling time sequence of the first data stream to a first moment on a time axis on which the device time information is located, wherein the device time information and the time sequence value that corresponds to the system clock of the codec meet a first mapping relationship.

13. The method according to claim 12, wherein the device time information represents air interface time of the first device.

14. The method according to claim 12 or 13, wherein the method further comprises:
receiving, by the second device, a system message from the first device, wherein the system message comprises a hyper frame number and clock information that corresponds to a moment at which a start point of a cyclic prefix of a first OFDM symbol in a hyper frame corresponding to the hyper frame number passes through an antenna connector; or
receiving, by the second device, data link layer control plane data from the first device, wherein the data link layer control plane data comprises clock information, and the clock information is associated with the device time information; and
performing, by the second device, clock synchronization with the first device based on the clock information.

15. The method according to any one of claims 12 to 14, wherein the method further comprises:
determining, by the second device, a transmission delay of the first packet based on the first moment and a second moment; and
sending, by the second device, first information to the first device, wherein the first information indicates the transmission delay of the first packet; and
receiving time of the first packet and the second moment meet the first mapping relationship.

16. The method according to any one of claims 12 to 15, wherein the method further comprises:
receiving, by the second device, third information from the first device, wherein the third information indicates a first delay difference, the first delay difference is a difference between the transmission delay of the first packet and a transmission delay of a second packet, and the second packet is sent by the first device to a third device; and
adjusting, by the second device, a processing moment of the first packet based on the first delay difference.

17. The method according to any one of claims 12 to 16, wherein the method further comprises:
receiving, by the second device, fourth information from the first device, wherein the fourth information indicates a second delay difference, the second delay difference is a difference between a processing delay of the first packet and a processing delay of the second packet, and the second packet is sent by the first device to the third device; and
adjusting, by the second device, the processing moment of the first packet based on the second delay difference.

18. The method according to any one of claims 12 to 17, wherein the method further comprises:
sending, by the second device, first indication information to the first device, wherein the first indication information indicates the processing delay of the first packet.

19. The method according to claim 18, wherein the first indication information is carried in first signaling.

20. The method according to claim 18 or 19, wherein the method further comprises:
receiving, by the second device, first acknowledgment information from the second device after sending the first indication information, wherein the first acknowledgment information indicates that the first indication information has been successfully received.

21. A data transmission method, comprising:
receiving, by a first device, a first packet from a second device, wherein the first packet comprises a first data stream and a sampling time sequence of the first data stream;
receiving, by the first device, a second packet from a third device, wherein the second packet comprises a second data stream and a sampling time sequence of the second data stream, the first packet and the second packet correspond to a first communication protocol, and the sampling time sequence of the first data stream and the sampling time sequence of the second data stream are time sequences whose values each are in a unit of a system clock of a codec of the first device;
receiving, by the first device, a third packet from the second device, wherein the third packet comprises a first time stamp and a second time stamp, the first time stamp indicates device time information of the second device, the second time stamp indicates a time sequence value corresponding to the system clock of the codec, the device time information of the second device and the time sequence value that corresponds to the system clock of the codec meet a first mapping relationship, and the third packet corresponds to a second communication protocol;
receiving, by the first device, a fourth packet from the third device, wherein the fourth packet comprises a third time stamp and a fourth time stamp, the third time stamp indicates device time information of the third device, the fourth time stamp indicates a time sequence value corresponding to the system clock of the codec, the device time information of the third device and the time sequence value that corresponds to the system clock of the codec meet a second mapping relationship, and the fourth packet corresponds to the second communication protocol; and
mapping, by the first device based on device time information of the first device, the device time information of the second device, the device time information of the third device, and the time sequence value corresponding to the system clock of the codec, the sampling time sequence of the first data stream and the sampling time sequence of the second data stream to a time axis on which the device time information of the first device is located, or a time axis on which the device time information of the second device is located, or a time axis on which the device time information of the third device is located.

22. The method according to claim 21, wherein the device time information of the second device represents air interface time of the second device, and the device time information of the third device represents air interface time of the third device.

23. The method according to claim 21 or 22, wherein the method further comprises:
sending, by the first device, a system message, wherein the system message comprises a hyper frame number and clock information that corresponds to a moment at which a start point of a cyclic prefix of a first orthogonal frequency division multiplexing OFDM symbol in a hyper frame corresponding to the hyper frame number passes through an antenna connector; or
sending, by the first device, data link layer control plane data to the second device and the third device, wherein the data link layer control plane data comprises clock information, wherein
the clock information is associated with the device time information of the first device, and the clock information is used by the second device and the third device to perform clock synchronization with the first device.

24. The method according to claim 23, wherein the device time information of the first device represents air interface time of the first device.

25. The method according to any one of claims 21 to 24, wherein the method further comprises:
determining, by the first device, a transmission delay of the first packet based on a first moment and a second moment, wherein the sampling time sequence of the first data stream and the first moment meet the first mapping relationship, and receiving time of the first packet and the second moment meet the first mapping relationship;
determining, by the first device, a transmission delay of the second packet based on a third moment and a fourth moment, wherein the sampling time sequence of the second data stream and the third moment meet the second mapping relationship, and receiving time of the second packet and the fourth moment meet the second mapping relationship;
determining, by the first device, a first delay difference between the transmission delay of the first packet and the transmission delay of the second packet based on the transmission delay of the first packet and the transmission delay of the second packet; and
adjusting, by the first device, a processing moment of the first packet or a processing moment of the second packet based on the first delay difference; or
sending, by the first device, first information to the second device or the third device, wherein the first information indicates the first delay difference.

26. The method according to any one of claims 21 to 25, wherein the method further comprises:
determining, by the first device, a second delay difference based on a processing delay of the first packet and a processing delay of the second packet; and
adjusting, by the first device, the processing moment of the first packet or the processing moment of the second packet based on the second delay difference; or sending, by the first device, second information to the second device or the third device, wherein the second information indicates the second delay difference.

27. A data transmission method, comprising:
sending, by a second device, a first packet to a first device, wherein the first packet comprises a first data stream and a sampling time sequence of the first data stream, and the first packet corresponds to a first communication protocol; and
sending, by the second device, a third packet to the first device, wherein the third packet comprises device time information of the second device and a time sequence value that corresponds to a system clock of a codec of the first device, and the third packet corresponds to a second communication protocol.

28. The method according to claim 27, wherein the device time information of the second device represents air interface time of the second device.

29. The method according to claim 27 or 28, wherein the method further comprises:
receiving, by the second device, a system message from the first device, wherein the system message comprises a hyper frame number and clock information that corresponds to a moment at which a start point of a cyclic prefix of a first OFDM symbol in a hyper frame corresponding to the hyper frame number passes through an antenna connector; or
receiving, by the second device, data link layer control plane data from the first device, wherein the data link layer control plane data comprises clock information, and the clock information is associated with device time information of the first device; and
performing, by the second device, clock synchronization with the first device based on the clock information, for the device time information of the second device to be consistent with the device time information of the first device.

30. The method according to any one of claims 27 to 29, wherein before the sending, by the second device, a third packet to the first device, the method further comprises:
obtaining, by the second device, the device time information of the second device.

31. The method according to claim 30, wherein
the obtaining, by the second device, the device time information of the second device comprises:
obtaining, by the second device, the device time information of the second device by using an inter-layer primitive of a protocol stack.

32. The method according to claim 31, wherein the protocol stack comprises a first protocol layer, a second protocol layer, and a third protocol layer; and
the obtaining, by the second device, the device time information of the second device by using an inter-layer primitive of the protocol stack comprises:
sending, by the first protocol layer, a first inter-layer primitive to the second protocol layer, wherein the first inter-layer primitive is used by the first protocol layer to request the second protocol layer to query the device time information of the second device;
sending, by the second protocol layer, a second inter-layer primitive to the third protocol layer, wherein the second inter-layer primitive is used by the second protocol layer to request the third protocol layer to query the device time information of the second device;
receiving, by the second protocol layer, a third inter-layer primitive from the third protocol layer, wherein the third inter-layer primitive is used by the third protocol layer to indicate the device time information of the second device to the second protocol layer; and
receiving, by the first protocol layer, a fourth inter-layer primitive from the second protocol layer, wherein the fourth inter-layer primitive is used by the second protocol layer to indicate the device time information of the second device to the first protocol layer.

33. The method according to any one of claims 27 to 32, wherein the method further comprises:
receiving, by the second device, first information from the first device, wherein the first information indicates a first delay difference, the first delay difference is a difference between a transmission delay of the first packet and a transmission delay of a second packet, and the second packet is sent by the third device to the first device; and
adjusting, by the second device, an actual sending moment of the first packet based on the first delay difference.

34. The method according to any one of claims 27 to 33, wherein the method further comprises:
receiving, by the second device, second information from the first device, wherein the second information indicates a second delay difference, the second delay difference is a difference between a processing delay of the first packet and a processing delay of the second packet, and the second packet is sent by the third device to the first device; and
adjusting, by the second device, the actual sending moment of the first packet based on the second delay difference.

35. A communication apparatus, comprising a unit configured to implement the method according to any one of claims 1 to 11, or comprising a unit configured to implement the method according to any one of claims 12 to 20, or comprising a unit configured to implement the method according to any one of claims 21 to 26, or comprising a unit configured to implement the method according to any one of claims 27 to 34.

36. A chip system, comprising at least one processor and an interface circuit, wherein the processor is configured to execute instructions and/or data exchange through the interface circuit, so that the chip system performs the method according to any one of claims 1 to 11, or the method according to any one of claims 12 to 20, the method according to any one of claims 21 to 26, or the method according to any one of claims 27 to 34.

37. A terminal, comprising the apparatus according to claim 35 or the chip system according to claim 36.

38. A computer-readable storage medium, wherein the computer-readable storage medium stores instructions, and when the instructions run on a computer, the computer is enabled to perform the method according to any one of claims 1 to 11, or the method according to any one of claims 12 to 20, the method according to any one of claims 21 to 26, or the method according to any one of claims 27 to 34.
